# EUROPEAN PATENT APPLICATION

(11) **EP 4 102 901 A1**
(43) Date of publication of application: **14.12.2022**
(21) Application number: 21765356.7
(22) Date of filing: 26.02.2021
(51) Int. Cl.: H04W 68/00

(54) **COMMUNICATION METHOD AND RELATED DEVICE**

(30) Priority: 05.03.2020 CN 202010146905
(71) Applicant: Huawei Technologies Co., Ltd., Shenzhen, Guangdong 518129, (CN)
(72) Inventor: LI, Xiangyu, Shenzhen, Guangdong 518129 (CN); PENG, Wenjie, Shenzhen, Guangdong 518129 (CN); WANG, Jun, Shenzhen, Guangdong 518129 (CN); DAI, Mingzeng, Shenzhen, Guangdong 518129 (CN)
(74) Representative: Thun, Clemens
(86) International application number: PCT/CN2021/078114
(87) International publication number: WO 2021/175162

(57) **Abstract**

Embodiments of this application disclose a communication method and a related apparatus, so that remote user equipment remote UE can communicate with a network via relay UE that resumes or establishes a radio resource control RRC connection, to ensure communication quality of the remote UE. The method includes: A first access network device receives a first message sent by first UE, where the first message includes a first identifier of second UE, and the first identifier is an identifier of the second UE in an RRC inactive state or an RRC idle state. The first access network device pages the second UE based on the first message. The first access network device sends a second message to the first UE, where the second message indicates the first UE to perform path switching, the second message includes a second identifier of the second UE, and the second identifier is an identifier of the second UE in an RRC connected state.

## Description

This application claims priority to Chinese Patent Application No. 202010146905.5, filed with the China National Intellectual Property Administration on March 5, 2020 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In wireless communication, a user equipment-to-network relay (user equipment to network relay, UE to NW relay) technology is a communication technology in which user equipment (user equipment, UE) accesses a network via another user equipment, so that network communication quality can be improved. For example, remote user equipment (remote UE) in unserved areas or underserved areas may access a network via relay user equipment (relay UE) in served areas, so that quality of communication between the remote UE and the network is improved.

However, in a conventional technology, only UE in a radio resource control (radio resource control, RRC) connected state is used as candidate relay UE, in other words, some UEs with a strong network communication capability but in an RRC inactive state or an RRC idle state cannot be used as candidate relay UEs. Consequently, less candidate UE can be used as target relay UE, affecting quality of communication performed by the remote UE via the relay UE.

### SUMMARY

Embodiments of this application provide a communication method and a related apparatus. Remote UE sends an identifier of candidate relay UE in an RRC inactive (inactive) state or an RRC idle (idle) state to an access network device. In this way, the access network device can page the candidate relay UE based on the identifier of the candidate relay UE, to resume or establish an RRC connection of the candidate relay UE. Finally, it is ensured that the remote UE can communicate with a network via the relay UE that resumes or establishes the RRC connection, so that communication quality of the remote UE is ensured.

A first aspect of embodiments of this application provides a communication method. The method includes: A first access network device receives a first message sent by first UE, where the first message includes a first identifier of second UE, and the first identifier is an identifier of the second UE in a radio resource control (radio resource control, RRC) inactive state or an RRC idle state. For example, the first UE may be remote UE, and the second UE may be relay UE. The first message may be specifically a measurement report message, including identifiers of one or more UEs, and is used to feed back, to the first access network device, related information of the UEs that is measured by the first UE. The first access network device pages the second UE based on the first message, so that the second UE can resume or establish an RRC connection. After the second UE resumes or establishes the RRC connection, the first access network device sends a second message to the first UE, where the second message indicates the first UE to perform path switching, the second message includes a second identifier of the second UE, and the second identifier is an identifier of the second UE in an RRC connected state. That is, the first message reported by the first UE to the first access network device may carry the identifier of the second UE in the RRC inactive state or the RRC idle state. The first access network device pages the second UE based on the first message. After the second UE resumes or establishes the RRC connection, the first access network device sends, to the first UE, the second message indicating the first UE to switch a path, so that the first UE can communicate with a network via the second UE that resumes or establishes the RRC connection.

In this embodiment, the first UE sends, to the first access network device, the identifier of the second UE in the RRC inactive state or the RRC idle state, so that the first access network device can page the second UE based on the identifier of the second UE, to resume or establish the RRC connection of the second UE. Finally, it is ensured that the first UE can communicate with the network via the second UE that resumes or establishes the RRC connection, so that communication quality of the first UE is ensured.

In a possible implementation, that the first access network device pages the second UE based on the first message includes: The first access network device sends a third message to a second access network device. The third message includes the first identifier, and the third message indicates the second access network device to page the second UE. The first message further includes an identifier of the second access network device, the second access network device is an anchor access network (anchor radio access network, Anchor RAN) device of the second UE, and the first identifier is the identifier of the second UE in the RRC inactive state. That is, when the second UE is in the RRC inactive state, the first message sent by the first UE to the first access network device further includes the identifier of the anchor access network device of the second UE. The first access network device may send the third message to the anchor access network device, to indicate the anchor access network device to page the second UE, so that paging of the second UE is implemented.

In embodiments, the first access network device sends, to the anchor access network device, the message for indicating the anchor access network device to page the second UE, so that the first access network device pages the second UE via the anchor access network device, to enable the second UE to resume the RRC connection. This improves flexibility of implementing the solution.

In a possible implementation, the method further includes: The first access network device receives a fifth message sent by the second access network device, where the fifth message includes the second identifier. To be specific, after the second access network device pages the second UE to enable the second UE to resume the RRC connection, the second access network device may send the identifier of the second UE in the RRC connected state to the first access network device, to indicate that the second UE is in the RRC connected state.

In a possible implementation, that the first access network device pages the second UE based on the first message includes: The first access network device sends a fourth message to a third access network device, to indicate the third access network device to send a third message to a second access network device. The third message includes the first identifier, and the third message indicates the second access network device to page the second UE. The first message further includes an identifier of the second access network device and an identifier of the third access network device, the second access network device is an anchor access network device of the second UE, the third access network device is an access network device on which the second UE camps, and the first identifier is the identifier of the second UE in the RRC inactive state. That is, when the second UE is in the RRC inactive state, the first message sent by the first UE to the first access network device further includes the identifier of the access network device on which the second UE camps and the identifier of the anchor access network device. The first access network device may indicate, via the access network device on which the second UE camps, the anchor access network device to page the second UE, so as to implement paging of the second UE.

In this embodiment, the first access network device may send the message to the access network device on which the second UE camps, and then the access network device on which the second UE camps sends the message for indicating the anchor access network device to page the second UE, so that when the first access network device is far away from the anchor access network device or there is no direct communication interface between the first access network device and the anchor access network device, efficiency of paging the second UE can be improved.

In a possible implementation, the method further includes: The first access network device receives a twelfth message sent by the third access network device, where the twelfth message includes the second identifier. To be specific, after the second access network device pages the second UE to enable the second UE to resume the RRC connection, the third access network device may send the identifier of the second UE in the RRC connected state to the first access network device, to indicate that the second UE is in the RRC connected state.

In a possible implementation, that the first access network device pages the second UE based on the first message includes: The first access network device sends a sixth message to a first core network device. The sixth message includes the first identifier, the sixth message indicates the first core network device to page the second UE, and the first identifier is the identifier of the second UE in the RRC idle state. The first core network device is a core network device corresponding to the first UE, and the first core network device is also a core network device corresponding to the second UE. This is equivalent to a case in which the first UE and the second UE currently correspond to a same core network device. That is, when the second UE is in the RRC idle state, the first access network device may indicate, by sending a message to the first core network device, the first core network device to page the second UE, so as to implement paging of the second UE in the RRC idle state. Both the core network device corresponding to the first UE and the core network device corresponding to the second UE are the first core network device.

In a possible implementation, that the first access network device pages the second UE based on the first message includes: The first access network device sends an eighth message to a first core network device. The eighth message indicates the first core network device to send an eleventh message to a second core network device, the eleventh message includes the first identifier, and the eleventh message indicates the second core network device to page the second UE. The first identifier is the identifier of the second UE in the RRC idle state, the first core network device is a core network device corresponding to the first UE, and the second core network device is a core network device corresponding to the second UE. That is, when the second UE is in the RRC idle state, and the core network device corresponding to the first UE is different from the core network device corresponding to the second UE, the first access network device may send the eighth message to the first core network device corresponding to the first UE, and then the first core network device sends the eleventh message to the second core network device corresponding to the second UE, so as to trigger the second core network device to page the second UE, and implement paging of the second UE.

In a possible implementation, that the first access network device pages the second UE based on the first message includes: The first access network device sends a seventh message to a third access network device. The seventh message indicates the third access network device to send a tenth message to a second core network device, the tenth message includes the first identifier, the tenth message indicates the second core network device to page the second UE, and the second core network device is a core network device corresponding to the second UE. The first message further includes an identifier of the third access network device, the third access network device is an access network device on which the second UE camps, and the first identifier is the identifier of the second UE in the RRC idle state. That is, when the second UE is in the RRC idle state, and the first message sent by the first UE includes the identifier of the third access network device on which the second UE camps, the first access network device may indicate, via the third access network device on which the second UE camps, the second core network device to page the second UE, so as to implement paging of the second UE.

In a possible implementation, the method further includes: The first access network device receives a ninth message sent by the first core network device, where the ninth message includes the second identifier. To be specific, after the first core network device pages the second UE to enable the second UE to establish the RRC connection, the first core network device may send the identifier of the second UE in the RRC connected state to the first access network device, to indicate that the second UE is in the RRC connected state.

A second aspect of embodiments of this application provides a communication method, including: First UE sends a first message to a first access network device, where the first message includes a first identifier of second UE, and the first identifier is an identifier of the second UE in an RRC inactive state or an RRC idle state; and the first message may be, for example, a measurement report message that includes one or more identifier of one or more UEs and that is used to feed back related information of the UEs that is measured by the first UE to the first access network device. The first UE receives a second message sent by the first access network device, where the second message indicates the first UE to perform path switching, the message includes a second identifier of the second UE, and the second identifier is an identifier of the second UE in an RRC connected state. The first UE establishes a sidelink (sidelink, SL) connection to the second UE based on the second identifier.

In this embodiment, the first UE sends, to the access network device, the identifier of the second UE in the RRC inactive state or the RRC idle state, so that the access network device can page the second UE based on the identifier of the second UE, to resume or establish an RRC connection of the second UE. Finally, it is ensured that the first UE can communicate with a network via the second UE that resumes or establishes the RRC connection, so that communication quality of the first UE is ensured.

In a possible implementation, the first message further includes an identifier of a second access network device, the second access network device is an anchor access network device of the second UE, and the first identifier is the identifier of the second UE in the RRC inactive state.

In a possible implementation, the first identifier is the identifier of the second UE in the RRC idle state.

In a possible implementation, the method further includes: The first UE receives a discovery message sent by the second UE, where the discovery message includes the first identifier. In other words, in a process of discovering the second UE, the first UE may obtain the first identifier by receiving the discovery message sent by the second UE.

A third aspect of embodiments of this application provides a communication method, including: First UE sends a first request message to second UE, where the first request message is used to request the second UE to resume or establish an RRC connection. The first UE receives a first request response message sent by the second UE, where the first request response message indicates that the second UE is in an RRC connected state.

In this embodiment, the first UE directly sends, to the second UE, the message for requesting the second UE to resume or establish the RRC connection, to trigger the second UE to resume or establish the RRC connection, so that the first UE can communicate with a network via the second UE that resumes or establishes the RRC connection, thereby ensuring communication quality of the first UE.

In a possible implementation, the method further includes: The first UE determines second UE as relay UE. Specifically, after reporting a measurement report message to an access network device, the first UE may determine the second UE as the relay UE based on an indication message delivered by the access network device. Alternatively, the first UE may determine the second UE in one or more UEs discovered by the first UE as the relay UE based on configuration information of the first UE.

A fourth aspect of embodiments of this application provides a communication method, including: Second UE receives a first request message sent by first UE, where the first request message is used to request the second UE to resume or establish an RRC connection. The second UE resumes or establishes the RRC connection. The second UE sends a first request response message to the first UE, where the first request response message indicates that the second UE is in an RRC connected state.

In this embodiment, the second UE receives the message sent by the first UE for requesting the second UE to resume or establish the RRC connection, to trigger the second UE to resume or establish the RRC connection, so that the first UE can communicate with a network via the second UE that resumes or establishes the RRC connection, thereby ensuring communication quality of the first UE.

In a possible implementation, that the second UE resumes or establishes the RRC connection includes: The second UE sends a second request message to an access network device, where the second request message is used to request to resume or establish the RRC connection. The second UE receives a third request message sent by the access network device, where the third request message indicates the second UE to resume or establish the RRC connection. The second UE sends a third request response message to the access network device, where the second request message indicates that the second UE resumes or establishes the RRC connection.

A fifth aspect of embodiments of this application provides a communication method, including: A second access network device receives a third message sent by a first access network device, where the third message indicates the second access network device to page second UE, the third message includes a first identifier, and the first identifier is an identifier of the second UE in an RRC inactive state. The second access network device pages the second UE based on the third message.

In this embodiment of this application, the second access network device receives the third message sent by the first access network device, so that the second access network device is triggered to page the second UE, so as to resume an RRC connection of the second UE. Finally, it is ensured that the first UE can communicate with a network via the second UE that resumes the RRC connection, so that communication quality of the first UE is ensured.

In a possible implementation, the method further includes: The second access network device sends a fifth message to the first access network device, where the fifth message includes a second identifier, and the second identifier is an identifier of the second UE in an RRC connected state.

A sixth aspect of embodiments of this application provides a communication method, including: A first core network device receives a sixth message sent by a first access network device, where the sixth message indicates the first core network device to page second UE, the sixth message includes a first identifier, the first identifier is an identifier of the second UE in an RRC idle state, and the first core network device is a core network device corresponding to first UE. The first core network device pages the second UE.

In this embodiment of this application, the first core network device receives the sixth message sent by the first access network device, so that the first core network device is triggered to page the second UE, so as to establish an RRC connection of the second UE. Finally, it is ensured that the first UE can communicate with a network via the second UE that establishes the RRC connection, so that communication quality of the first UE is ensured.

In a possible implementation, the method further includes: The first core network device sends a ninth message to the first access network device, where the ninth message includes a second identifier, and the second identifier is an identifier of the second UE in an RRC connected state.

A seventh aspect of embodiments of this application provides a first access network device, including a transceiver unit. The transceiver unit is configured to receive a first message sent by first user equipment UE, where the first message includes a first identifier of second UE, and the first identifier is an identifier of the second UE in a radio resource control RRC inactive state or an RRC idle state. The transceiver unit is further configured to page the second UE based on the first message. The transceiver unit is further configured to send a second message to the first UE, where the second message indicates the first UE to perform path switching, the second message includes a second identifier of the second UE, and the second identifier is an identifier of the second UE in an RRC connected state.

In a possible implementation, the transceiver unit is further configured to send a third message to a second access network device. The third message includes the first identifier, and the third message indicates the second access network device to page the second UE. The first message further includes an identifier of the second access network device, the second access network device is an anchor access network device of the second UE, and the first identifier is the identifier of the second UE in the RRC inactive state.

In a possible implementation, the transceiver unit is further configured to send a fourth message to a third access network device, to indicate the third access network device to send a third message to a second core network device. The third message includes the first identifier, and the third message indicates the second access network device to page the second UE. The first message further includes an identifier of the second access network device and an identifier of the third access network device, the second access network device is an anchor access network device of the second UE, the third access network device is an access network device on which the second UE camps, the first identifier is the identifier of the second UE in the RRC inactive state, and a second core network device is a core network device corresponding to the second UE.

In a possible implementation, the transceiver unit is further configured to receive a fifth message sent by the second access network device, where the fifth message includes the second identifier.

In a possible implementation, the transceiver unit is further configured to receive a twelfth message sent by the third access network device, where the twelfth message includes the second identifier.

In a possible implementation, the transceiver unit is further configured to send a sixth message to a first core network device, where the sixth message includes the first identifier, the sixth message indicates the first core network device to page the second UE, the first identifier is the identifier of the second UE in the RRC idle state, and the first core network device is a core network device corresponding to the first UE.

In a possible implementation, the transceiver unit is further configured to send a seventh message to a third access network device. The seventh message indicates the third access network device to send a tenth message to a second core network device, the tenth message includes the first identifier, the tenth message indicates the second core network device to page the second UE, and the second core network device is a core network device corresponding to the second UE. The first message further includes an identifier of the third access network device, the third access network device is an access network device on which the second UE camps, and the first identifier is the identifier of the second UE in the RRC idle state.

In a possible implementation, the transceiver unit is further configured to send an eighth message to a first core network device. The eighth message indicates the first core network device to send an eleventh message to a second core network device, the eleventh message includes the first identifier, and the eleventh message indicates the second core network device to page the second UE. The first identifier is the identifier of the second UE in the RRC idle state, the first core network device is a core network device corresponding to the first UE, and the second core network device is a core network device corresponding to the second UE.

In a possible implementation, the transceiver unit is further configured to receive a ninth message sent by the first core network device, where the ninth message includes the second identifier.

An eighth aspect of embodiments of this application provides first UE, including a transceiver unit and a processing unit. The transceiver unit is configured to send a first message to a first access network device, where the first message includes a first identifier of second UE, and the first identifier is an identifier of the second UE in an RRC inactive state or an RRC idle state. The transceiver unit is configured to receive a second message sent by the first access network device, where the second message indicates the first UE to perform path switching, the message includes a second identifier of the second UE, and the second identifier is an identifier of the second UE in a connected state. The processing unit is configured to establish an SL connection to the second UE based on the second identifier.

In a possible implementation, the first message further includes an identifier of a second access network device, the second access network device is an anchor access network device of the second UE, and the first identifier is the identifier of the second UE in the RRC inactive state.

In a possible implementation, the first identifier is the identifier of the second UE in the RRC idle state.

In a possible implementation, the transceiver unit is further configured to receive a discovery message sent by the second UE, where the discovery message includes the first identifier.

A ninth aspect of embodiments of this application provides first UE, including a transceiver unit. The transceiver unit is configured to send a first request message to second UE, where the first request message is used to request the second UE to resume or establish an RRC connection. The transceiver unit is configured to receive a first request response message sent by the second UE, where the first request response message indicates that the second UE is in an RRC connected state.

In a possible implementation, the first UE further includes a processing unit, and the processing unit is configured to determine the second UE as relay UE.

A tenth aspect of embodiments of this application provides second UE, including a transceiver unit and a processing unit. The transceiver unit is configured to receive a first request message sent by first UE, where the first request message is used to request the second UE to resume or establish an RRC connection. The processing unit is configured to resume or establish the RRC connection. The transceiver unit is configured to send a first request response message to the first UE, where the first request response message indicates that the second UE is in an RRC connected state.

In a possible implementation, the processing unit is further configured to indicate the transceiver unit to send a second request message to an access network device, where the second request message is used to request to resume or establish the RRC connection. The transceiver unit is further configured to receive a third request message sent by the access network device, where the third request message indicates the second UE to resume or establish the RRC connection. The second UE sends a third request response message to the access network device, where the second request message indicates that the second UE resumes or establishes the RRC connection.

An eleventh aspect of embodiments of this application provides a second access network device, including a transceiver unit. The transceiver unit is configured to receive a third message sent by a first access network device, where the third message indicates the second access network device to page second UE, the third message includes a first identifier, and the first identifier is an identifier of the second UE in an RRC inactive state. The transceiver unit is configured to page the second UE based on a first message.

In a possible implementation, the second access network device further includes the transceiver unit. The transceiver unit is configured to send a fifth message to the first access network device. The fifth message includes a second identifier, and the second identifier is an identifier of the second UE in an RRC connected state.

A twelfth aspect of embodiments of this application provides a first core network device, including a transceiver unit. The transceiver unit is configured to receive a sixth message sent by a first access network device, where the sixth message indicates the first core network device to page second UE, the sixth message includes a first identifier, the first identifier is an identifier of the second UE in an RRC idle state, and the first core network device is a core network device corresponding to first UE. The transceiver unit is configured to page the second UE.

In a possible implementation, the first core network device further includes the transceiver unit. The transceiver unit is configured to send a ninth message to the first access network device. The ninth message includes a second identifier, and the second identifier is an identifier of the second UE in an RRC connected state.

A thirteenth aspect of embodiments of this application provides a communication apparatus, including a processor and a memory. The memory stores operation instructions, and the processor reads the operation instructions in the memory to implement the method according to any one of the implementations of the first aspect or the fifth aspect. The communication apparatus may be an access network device or a component that may be used in the access network device.

A fourteenth aspect of embodiments of this application provides a communication apparatus, including a processor and a memory. The memory stores operation instructions, and the processor reads the operation instructions in the memory to implement the method according to any one of the implementations of the second aspect, the third aspect, or the fourth aspect. The communication apparatus may be a terminal device or a component that may be used in the terminal device.

A fifteenth aspect of embodiments of this application provides a communication apparatus, including a processor and a memory. The memory stores operation instructions, and the processor reads the operation instructions in the memory to implement the method according to any one of the implementations of the sixth aspect. The communication apparatus may be a core network device or a component that may be used in the core network device.

A sixteenth aspect of embodiments of this application provides a computer-readable storage medium, including instructions. When the instructions are run on a computer, the computer is enabled to perform the method according to any one of the implementations of the first aspect, the second aspect, the third aspect, the fourth aspect, the fifth aspect, or the sixth aspect.

A seventeenth aspect of embodiments of this application provides a computer program product including instructions. When the computer program product runs on a computer, the computer is enabled to perform the method according to any one of the implementations of the first aspect, the second aspect, the third aspect, the fourth aspect, the fifth aspect, or the sixth aspect.

The implementations of embodiments of this application may be combined with each other without conflict.

According to the foregoing technical solutions, it can be learned that embodiments of this application have the following advantages.

Embodiments of this application provide a communication method and a related apparatus. Remote UE sends an identifier of candidate relay UE in an RRC inactive state or an RRC idle state to an access network device. In this way, the access network device can page the candidate relay UE based on the identifier of the candidate relay UE, to resume an RRC connection of the candidate relay UE. Finally, it is ensured that the remote UE can communicate with a network via the relay UE that resumes or establishes the RRC connection, so that communication quality of the remote UE is ensured.

### BRIEF DESCRIPTION OF DRAWINGS

FIG. 1 is a schematic diagram of an application scenario according to an embodiment of this application;
FIG. 2 is a schematic flowchart of a communication method 200 according to an embodiment of this application;
FIG. 3a is a schematic flowchart of a discovery mode according to an embodiment of this application;
FIG. 3b is a schematic flowchart of another discovery mode according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a schematic flowchart of a communication method 800 according to an embodiment of this application;
FIG. 9 is a schematic flowchart of a communication method 900 according to an embodiment of this application;
FIG. 10 is a schematic flowchart of a communication method 1000 according to an embodiment of this application;
FIG. 11 is a schematic diagram of a structure of an access network device 1100 according to an embodiment of this application;
FIG. 12 is a schematic diagram of a structure of UE 1200 according to an embodiment of this application;
FIG. 13 is a schematic diagram of a structure of an access network device 1300 according to an embodiment of this application;
FIG. 14 is a schematic diagram of a structure of a core network device 1400 according to an embodiment of this application; and
FIG. 15 is a schematic diagram of a structure of a communication apparatus 1500 according to an embodiment of this application.

### DESCRIPTION OF EMBODIMENTS

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way is interchangeable in an appropriate circumstance, so that embodiments described herein can be implemented in another order other than the order illustrated or described herein. Moreover, the terms "include", "contain" and any other variants mean to cover the non-exclusive inclusion. For example, a process, method, system, product, or device that includes a list of steps or modules is not necessarily limited to those modules, but may include other modules not expressly listed or inherent to such a process, method, system, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into units in this application is logical division and may be other division in an actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

The technical solutions of embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, and a new radio (new radio, NR) system.

User equipment (user equipment, UE) in embodiments of this application may be an access terminal, a terminal device, a UE unit, a UE station, a mobile station, a remote station, a remote terminal, a mobile device, a UE terminal, a terminal, a wireless communication device, a UE agent, a UE apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a terminal in a 5G network, a terminal in a future evolved PLMN network, or the like. The user equipment may be mobile or fixed.

An access network device in embodiments of this application may be a device configured to communicate with UE, and the access network device may be a radio access network (radio access network, RAN) device. The RAN device may include various types of base stations. For example, the base stations in embodiments of this application may include macro base stations, micro base stations, relay stations, access points, and the like in various forms. In systems using different radio access technologies, names of devices that have a base station function may be different. For example, in an LTE network, a device that has a base station function is referred to as an evolved NodeB (evolved NodeB, eNB or eNodeB); in a 3rd generation (3rd Generation, 3G) network, a device that has abase station function is referred to as a NodeB (NodeB); in a 5G network, a device that has a base station function may be referred to as a gNodeB (gNodeB, gNB). This is not limited in embodiments of this application.

A core network (core network, CN) device in embodiments of this application may be a control plane anchor of UE, and provides functions such as a registration area (registration area) update for the UE. For example, the core network device may include an access and mobility management function (access and mobility management function, AMF). The core network device may be a network device configured to provide functions such as core access (core access) and mobility management for the UE. A specific function of the core network device may be similar to a function of a mobility management entity (mobility management entity, MME) in an LTE system.

In wireless communication, a communication path between remote UE and a network includes a direct path between the remote UE and an access network device and an indirect path through which the remote UE accesses the access network device via relay UE. When communication quality of one path is poor, the remote UE may switch from the path to another path. For example, when a direct path is poor, the remote UE may switch from the direct path to an indirect path, to ensure a service requirement of the remote UE. For another example, when an indirect path is poor, the remote UE may switch from the current indirect path to another indirect path, to ensure a service requirement of the remote UE.

Currently, in a scenario in which the remote UE switches from the direct path to the indirect path or switches from the indirect path to the another indirect path, the remote UE can access a network only via relay UE in an RRC connected state. Consequently, some UEs that have a strong network communication capability but are in an RRC inactive state or an RRC idle state cannot provide a network access service for the remote UE, and consequently candidate UEs that can serve as the target relay UE are greatly reduced, and communication quality of communication performed by the remote UE via the relay UE is affected.

In view of this, embodiments of this application provide a communication method. Remote UE sends, to an access network device, an identifier of candidate relay UE in an RRC inactive state or an RRC idle state, so that the access network device can page the candidate relay UE based on the identifier of the candidate relay UE, to resume or establish an RRC connection of the candidate relay UE. Finally, it is ensured that the remote UE can communicate with a network via the candidate relay UE that resumes or establishes the RRC connection, and the candidate relay UE not in an RRC connected state (to be specific, in the RRC idle state or the RRC inactive state) can also provide a network access service for the remote UE, so that communication quality of the remote UE is ensured.

For ease of understanding, the following explains terms used in embodiments of this application.

When UE is in an RRC inactive state or an RRC idle state, the UE is disconnected from a base station. In this case, if a network side needs to send data or voice to the UE, the network side finds the UE based on a paging message. After receiving the paging message, the UE establishes a connection to the base station, to implement data or voice transmission.

Base station-side paging (RAN paging) refers to paging initiated by a base station side for UE in an RRC inactive state. RAN paging is usually initiated by an anchor base station (namely, the last base station that serves the UE before the UE enters the RRC inactive state from an RRC connected state) of the UE. Because an AMF side is unaware that the UE enters the RRC inactive state, an AMF considers that the UE is still in the RRC connected state, and continues sending data to the last serving base station. Finally, the serving base station cannot find the UE and sends paging messages to all base stations within an RNA range of the UE. Then, the base stations transparently transmit the paging messages to all UEs connected to the base stations. The UE that monitors the paging message checks whether the paging message includes an ID of the UE. If the paging message includes the ID of the UE, the UE initiates an RRC resume request to connect to a network. If the paging message does not include the ID of the UE, the UE ignores the paging request.

RAN paging is initiated based on a RAN-based notification area (RAN-based notification area, RNA). Specifically, the RNA may be formed in two manners: 1. by using a list of cells (list of cells); and 2. by using a list of RAN areas (list of RAN Area). Each RAN area includes some or all tracking areas (tracking areas, TAs). If the RAN area includes all TAs, the RAN area includes a corresponding TAC identifier. If the RAN area includes some TAs, the RAN area includes a corresponding RAN-based notification area code (RAN-based notification area code, RANAC) identifier. Before the UE enters the RRC inactive state, the anchor base station of the UE configures an RNA for the UE, which means that when the UE moves within an RNA range, an RNA update (RNA update, RNAU) does not need to be performed. If the UE moves out of the RNA range, the RNAU is initiated to determine an RNA range in which the UE is located.

Core network-side paging (CN paging) refers to paging initiated by a core network side for UE in an RRC idle state. CN paging is usually initiated by a core network device (for example, an AMF). The AMF sends paging messages to all base stations included in a TAI list of the UE, and then the base stations broadcast the paging messages in cells corresponding to the base stations. UE that monitors the paging message checks whether the paging message includes an identifier of the UE. If the paging message includes the identifier of the UE, the UE initiates an RRC establishment request to the base station, so as to connect to a network. If the paging message does not include the identifier of the UE, the UE ignores the paging message.

CN paging is paging initiated based on a TA. The TA is a concept defined in an LTE/NR system for UE location management. When the UE is in the RRC idle state, the core network side can know a tracking area of the UE. When the UE in the idle state needs to be paged, paging needs to be performed in all cells in the tracking area in which the UE is registered. The TA is configured at a cell level. A same TA may be configured for a plurality of cells, and one cell corresponds to only one TA. A tracking area identity (tracking area identity, TAI) includes a public land mobile network (public land mobile network, PLMN) and a tracking area code (tracking area code, TAC), that is, TAI=PLMN+TAC. A TA list (TA List) includes a plurality of TAs, and the plurality of TAs are allocated to one UE. When moving within the TA list, the UE does not need to perform a TA update (TA Update, TAU), to reduce frequent interaction with the network. When the UE enters a TA area that is not included in the TA list with which the UE is registered, the TAU needs to be performed. A core network reallocates a group of TAs to the UE. The new allocated TAs can also include some TAs in the original TA list. In addition, the UE periodically performs the TAU, so that the core network knows a location of the UE.

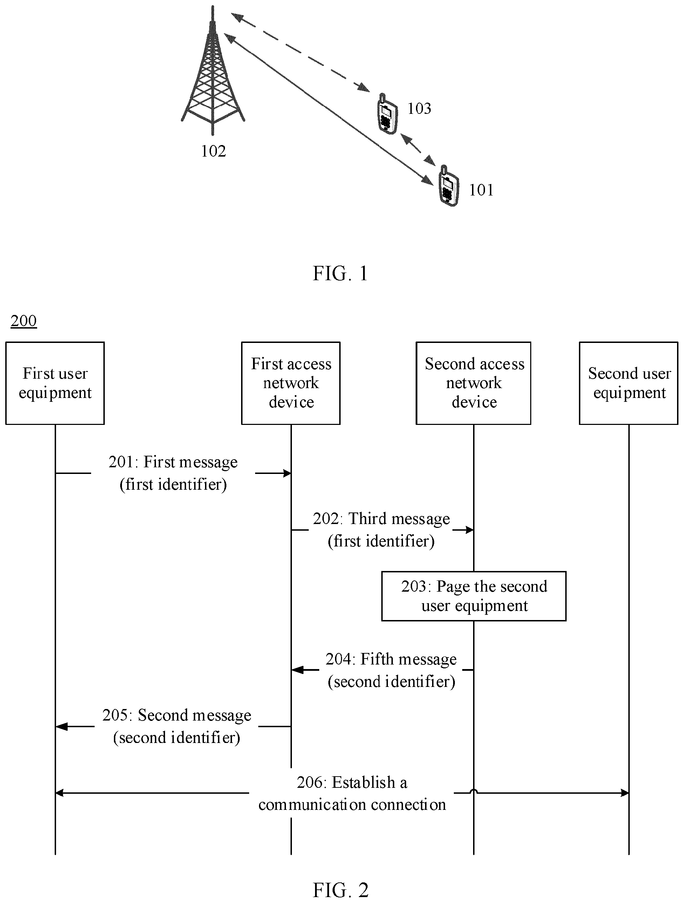

For ease of understanding, the following briefly describes an application scenario of embodiments of this application with reference to FIG. 1. As shown in FIG. 1, the application scenario includes UE 101, an access network device 102, and UE 103. The UE 101 is remote UE, the UE 101 is connected to the access network device 102, the UE 103 is within coverage of the access network device 102, and the UE 103 is not in an RRC connected state. After the UE 101 discovers the UE 103 in a discovery process, the UE 101 may send a message to the access network device 102, where the message includes an identifier of the UE 101 is in an RRC inactive state or an RRC idle state. The access network device 102 pages the UE 103 based on the message sent by the UE 101. After the UE 103 resumes or establishes an RRC connection, the access network device 102 sends a response message to the UE 101, to indicate the UE 101 to perform path switching. The UE 101 switches, based on the response message, to an indirect path established via the UE 103.

It should be understood that an identifier in the following embodiments of this application may be a specific identifier, or may include corresponding information that can be used to infer the identifier. For example, an identifier of an access network device may be a physical cell identifier (physical cell identifier, PCI) or a cell global identifier (cell global identifier, CGI).

It should be understood that a plurality of pieces of information included in a message in the following embodiments of this application may be directly the information, or may be other information that has a corresponding association relationship with the information. In other words, the information in the message may be individual information about user equipment, or the information in the message may include other information that has a corresponding association relationship with the user equipment. For example, the message may include identification information corresponding to the UE and identification information of an access network device corresponding to the UE, and all the information has an association relationship with the UE.

FIG. 2 is a schematic flowchart of a communication method 200 according to an embodiment of this application. As shown in FIG. 2, the communication method 200 provided in this embodiment of this application includes the following steps.

201: First UE sends a first message to a first access network device.

The first message includes a first identifier of second UE and an identifier of a second access network device. The first identifier is an identifier of the second UE in an RRC inactive state. The second access network device is an anchor access network device of the second UE, in other words, the second access network device is an access network device that last serves the second UE before the second UE enters the RRC inactive state. For example, the first identifier may be an inactive radio network temporary identifier (inactive radio network temporary identifier, I-RNTI) of the second UE.

It should be understood that the first access network device is an access network device currently connected to the first UE, and the second access network device is the anchor (anchor) access network device of the second UE, in other words, the second access network device is the access network device that last serves the second UE before the second UE enters the RRC inactive state.

The first UE may interact with the first access network device in a plurality of manners. For example, when the first UE communicates with a network through a direct path, the first UE may directly exchange a message with the first access network device. When the first UE communicates with the network through an indirect path, the first UE may exchange a message with the first access network device via currently connected relay UE. This is not specifically limited in embodiments of this application. For example, the first message may be specifically a measurement report (measurement report) message reported by the first UE to the first access network device. The measurement report message is obtained by the first UE by discovering candidate relay UE in a specific range and measuring related information of the candidate relay UE. The second UE is in the RRC inactive state, and the first identifier sent by the first UE may be, for example, the I-RNTI of the second UE.

It should be understood that, in a possible implementation, the first message includes only related information of the second UE, in other words, candidate relay UE determined by the first UE includes only the second UE. In another possible implementation, in addition to related information of the second UE, the first message may further include related information of another UE, that is, there are a plurality of candidate relay UEs determined by the first UE.

Optionally, in some specific implementations, the first message may further include RNA area information of the second UE, where the RNA area information indicates an RNA area corresponding to the second UE, and may include, for example, an RANAC identifier or a list or a set of all cell identifiers in the RNA area. Simply, the first message may include RNA information. For example, the RNA information includes one or more of the identifier of the anchor access network device, the RANAC identifier, and the list or the set of all the cell identifiers in the RNA area.

Optionally, in some specific embodiments, the first message may further include one or more of the following quality: signal quality of a path between the first UE and the second UE, signal quality of a path between the first UE and an access network device, and signal quality of a path between the second UE and an access network device.

Optionally, the first message further includes an identifier of an access network device on which the second UE camps.

Optionally, the first message further includes a layer 2 identifier (L2 ID) of the first UE.

202: The first access network device sends a third message to the second access network device, where the third message includes the first identifier, and the third message indicates the second access network device to page the second UE.

After the first access network device receives the first message sent by the first UE, and the first access network device determines the second UE as target relay UE, the first access network device may send the third message to the second access network device based on the identifier of the second access network device in the first message, to indicate the second access network device to page the second UE. The third message includes the first identifier.

In a possible manner, the first message includes the first identifier of the second UE, and the first access network device may determine the second UE as the target relay UE of the first UE based on the first message, and then send the third message to the second access network device.

In another possible manner, the first message includes the first identifier of the second UE and an identifier of another UE, and the first access network device may further send the third message to the second access network device after determining the second UE as the target relay UE of the first UE according to a relay UE selection policy. It is easy to understand that the relay UE selection policy may be preset, or may be determined based on reference information. For example, the first access network device may determine one of the plurality of candidate relay UEs as the target relay UE based on one or more of information such as related information (for example, signal quality of a path between each candidate relay UE and the first UE) of the candidate relay UE in the first message, a current load status of the first access network device, or a configured scheduling policy.

Optionally, the third message further includes a cell radio network temporary identifier (cell radio network temporary identifier, C-RNTI) and/or the layer 2 identifier (L2 ID) of the first UE.

For example, the third message may be specifically a paging request (Paging Request) message.

For example, the third message may be specifically a path switch request (Path switch Request) message.

203: The second access network device pages the second UE based on the third message.

For example, that the second access network device triggers paging of the second UE may specifically include: The second access network device sends, based on the I-RNTI of the second UE in the third message, RAN paging messages to all access network devices in an RNA corresponding to the I-RNTI, that is, the second access network device triggers RAN paging of the second UE.

It should be understood that the second access network device may determine, based on one or more of information such as content of the third message, a current load status of the second access network device, or a configured scheduling policy, whether to trigger paging of the second UE.

Optionally, the RAN paging message may further include an identifier of the first access network device.

Optionally, the RAN paging message further includes the C-RNTI and/or the layer 2 identifier (L2 ID) of the first UE.

After the second access network device triggers paging of the second UE based on the third message, the second UE may receive the RAN paging message and resume an RRC connection. It should be understood that a process in which the second UE resumes the RRC connection includes: The second UE sends an RRC connection resume request message to the access network device on which the second UE camps, the access network device sends an RRC connection resume message to the second UE, and the second UE sends an RRC connection resume complete message to the access network device.

It should be understood that, in a process in which the second UE resumes the RRC connection, the second UE sends the RRC connection resume request message to the camped access network device. When the camped access network device determines to resume the RRC connection for the second UE, the camped access network device allocates a corresponding second identifier (namely, an identifier of the second UE in an RRC connected state) to the second UE, and sends the RRC connection resume message to the second UE. After receiving the RRC connection resume message, the second UE further sends the RRC connection resume complete message to the access network device. When the access network device on which the second UE camps is the second access network device, the second access network device allocates the second identifier to the second UE. When the access network device on which the second UE camps is not the second access network device, after allocating the second identifier to the second UE, the access network device on which the second UE camps sends a message (for example, an RRC connection notification (RRC connection notification) message) to the second access network device to indicate the second identifier. Optionally, in the process in which the second UE resumes the RRC connection, the second UE may alternatively send the RRC connection resume request message to another access network device. The another access network device may be an access network device selected by the second UE based on a configured cell selection or reselection condition.

Optionally, after the second UE resumes the RRC connection, an access network device to which the second UE resumes the RRC connection sends an RRC reconfiguration message to the second UE. For example, the RRC reconfiguration message includes one or more of a sidelink radio bearer SLRB configuration for the first UE, a data radio bearer DRB configuration for the first UE, an association relationship between an SLRB configuration for the first UE and a DRB configuration for the first UE, the C-RNTI of the first UE, the layer 2 identifier of the first UE, and a local identifier (local index) of the first UE that are configured by the second access network device for the second UE. It should be understood that the local identifier of the first UE is allocated by the access network device to which the second UE resumes the RRC connection.

204: The second access network device sends a fifth message to the first access network device, where the fifth message includes the second identifier.

It should be understood that, if the access network device to which the second UE resumes the RRC connection is the second access network device, the second access network device may send the fifth message to the first access network device based on the second identifier allocated by the second access network device to the second UE, where the fifth message includes the second identifier, to indicate that the second UE is in the RRC connected state.

If the access network device to which the second UE resumes the RRC connection is not the second access network device, the access network device to which the second UE resumes the RRC connection may send an RRC connection complete notification message to the second access network device, where the RRC connection complete notification message includes the second identifier allocated to the second UE. The second access network device may send the fifth message to the first access network device based on the second identifier.

For example, the fifth message may be specifically a paging request complete (paging request complete) message.

For example, the fifth message may be specifically a path switch complete (path switch complete) message.

Optionally, the fifth message further includes an identifier of the access network device to which the second UE resumes the RRC connection. Optionally, in a specific implementation, the access network device to which the second UE resumes the RRC connection may directly send an RRC connection notification message to the first access network device. The RRC connection notification message includes one or more of the second identifier allocated to the second UE, a layer 2 identifier (L2 ID) of the second UE, and the local identifier (local index) of the first UE. The local identifier may be allocated to the first UE by the access network device to which the second UE resumes the RRC connection, or may be allocated to the first UE by the second UE. It should be understood that in this case, step 204 may not be performed.

Optionally, the fifth message further includes the layer 2 identifier (L2 ID) of the second UE.

Optionally, the fifth message further includes the local identifier (local index) of the first UE.

205: The first access network device sends a second message to the first UE, where the second message indicates the first UE to perform path switching, the second message includes the second identifier of the second UE, and the second identifier is the identifier of the second UE in the RRC connected state.

Optionally, the second message further includes the identifier of the access network device to which the second UE resumes the RRC connection.

Optionally, the second message further includes the layer 2 identifier (L2 ID) of the second UE.

Optionally, the second message further includes the local identifier (local index) of the first UE. The local identifier may be allocated to the first UE by the access network device to which the second UE resumes the RRC connection, or may be allocated to the first UE by the second UE.

For example, the second message may be specifically a path switch command (path switch command) message.

After the second UE resumes the RRC connection, the first access network device may send the second message to the first UE, to indicate the first UE to perform path switching by using the second UE as the relay UE.

It should be understood that, when the second UE resumes the RRC connection, the access network device connected to the second UE reallocates, to the second UE, the identifier (namely, the second identifier) of the second UE in the RRC connected state. For example, the second identifier may be a cell radio network temporary identifier (cell radio network temporary identifier, C-RNTI). The first access network device may include the second identifier in the second message sent to the first UE, so as to notify the first UE that the second UE has resumed the RRC connection.

In an optional implementation, the first access network device may continuously receive the measurement report message sent by the first UE. If the measurement report message received by the first access network device includes the identifier of the second UE in the RRC connected state, the first access network device sends the second message to the first UE. To be specific, the first UE may continuously execute a UE discovery procedure, to obtain the identifier of the second UE in the RRC connected state from the second UE, and the first UE may continuously trigger the measurement report message. When the first access network device receives the identifier that is sent by the first UE and that is of the second UE in the RRC connected state, the first access network device may confirm that the second UE is already in the RRC connected state and the signal quality of the path between the first UE and the second UE meets a condition, so that the first access network device sends, to the first UE, the second message for indicating the first UE to perform path switching.

206: The first UE establishes a communication connection to the second UE.

After the first UE receives the second message sent by the first access network device, the first UE may establish the sidelink SL communication connection to the second UE, to switch a path between the first UE and the first access network device to an indirect path between the first UE and the second UE.

It should be understood that, that the first UE establishes a communication connection to the second UE means: An access stratum of the first UE indicates a PC5-S layer of the first UE to establish the communication connection. For example, the access stratum is an RRC layer.

It should be understood that the first UE further establishes, via the second UE, an RRC connection to the access network device connected to the second UE.

Optionally, a PC5-S connection may be established between the first UE and the second UE to implement communication between the first UE and the second UE. For example, the first UE may send a solicitation (Solicitation) message, where the solicitation message carries one or more of the second identifier of the second UE, the identifier of the access network device connected to the second UE, and the layer 2 identifier of the second UE. After the first UE receives a response (Response) message of the second UE, the first UE triggers establishment of the PC5-S connection to the second UE. It should be understood that the second UE returns the response message when determining that the information included in the solicitation message is information corresponding to the second UE. For example, the first UE may send a connection establishment request (direct communication request) message, where the connection establishment request message carries one or more of the second identifier of the second UE, the identifier of the access network device connected to the second UE, and the layer 2 identifier of the second UE. After the first UE receives a connection establishment accept (direct communication accept) message of the second UE, the first UE establishes the PC5-S connection to the second UE. It should be understood that the second UE returns the connection establishment accept message when determining that the information included in the connection establishment request message is information corresponding to the second UE. For example, when the second message includes the layer 2 identifier (L2 ID) of the second UE, the first UE may directly initiate establishment of the connection to the second UE based on the layer 2 identifier of the second UE. In other words, in this case, a destination address corresponding to the connection establishment request message is the layer 2 identifier of the second UE included in the second message. For example, when the second message includes the C-RNTI of the second UE, the first UE may directly initiate establishment of the connection to the second UE based on the layer 2 identifier that is of the second UE and that corresponds to the C-RNTI. In other words, in this case, a destination address corresponding to the connection establishment request message is the layer 2 identifier corresponding to the C-RNTI that is of the second UE and that is included in the second message.

Optionally, in a specific implementation, after the first UE establishes the communication connection to the second UE, the first UE may send an RRC connection release request message to the first access network device, to request to disconnect an RRC connection between the first UE and the first access network device. Optionally, the first access network device may send context information such as an SN status transfer of the first UE to the access network device accessed by the second UE, so that the access network device connected to the second UE delivers reconfiguration information to the second UE, to provide the second UE with the configuration for serving the first UE. Optionally, after receiving the RRC connection release request message, the first access network device sends an RRC connection release request complete message to the first UE.

Optionally, in a specific implementation, after the first UE establishes the communication connection to the second UE, the first UE may send a path switch complete (path switch command complete) message to the access network device to which the second UE resumes the RRC connection. Optionally, the path switch complete message further includes the local identifier (local index) of the first UE. The local identifier may be allocated to the first UE by the access network device to which the second UE resumes the RRC connection, or may be allocated to the first UE by the second UE. Optionally, in a specific implementation, after the first UE receives the second message sent by the first access network device, if there is an indirect path between the first UE and the first access network device currently, the first UE may release a sidelink SL communication connection to current relay UE that is on the indirect path. It should be understood that, that the first UE releases a communication connection to current relay UE means: The access stratum of the first UE indicates the PC5-S layer of the first UE to release the communication connection.

In this embodiment of this application, remote UE sends, to an access network device, an identifier of candidate relay UE in an RRC inactive state and an identifier of an anchor access network device of the candidate relay UE, so that the access network device of the remote UE can send a message to the anchor access network device of the candidate relay UE, to trigger paging of the candidate relay UE, and resume an RRC connection of the candidate relay UE. Finally, it is ensured that the remote UE can communicate with a network via the relay UE that resumes the RRC connection, so that communication quality of the remote UE is ensured.

Optionally, in a specific implementation, the communication method 200 further includes a process in which the first UE discovers the candidate relay UE, namely, a process in which the first UE discovers the second UE. Specifically, UEs may discover each other by sending a discovery (Discovery) message through a PC5-S layer.

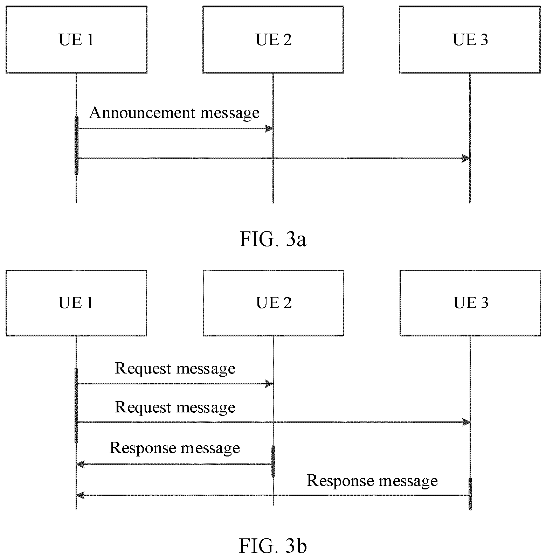

In a specific discovery mode, UE having a relay capability may send an announcement (Announcement) message to another UE within a specific range, so that the another UE can discover the UE having the relay capability. FIG. 3a is a schematic flowchart of a discovery mode according to an embodiment of this application. UE 1 sends announcement messages to UE 2 and UE 3. After receiving the announcement messages sent by the UE 1, the UE 2 and the UE 3 may discover the UE 1 having a relay capability.

In another specific discovery mode, remote UE may send a solicitation message to another UE within a specific range. After receiving the solicitation message, UE having a relay capability may return a response message to the remote UE, so as to implement mutual discovery between the UEs. FIG. 3b is a schematic flowchart of another discovery mode according to an embodiment of this application. UE 1 sends solicitation messages to UE 2 and UE 3. After receiving the solicitation messages, the UE 2 and the UE 3 each return a response message to the UE 1, so that the UE 1 can discover the UE 2 and the UE 3.

That is, the first UE may discover the second UE by sending the solicitation message and receiving the response message returned by the second UE, or the first UE may discover the second UE by receiving an announcement message sent by the second UE.

Optionally, in a specific implementation, after the first UE discovers another UE by receiving a response message or an announcement message returned by the another UE, the first UE may determine the candidate relay UE based on a measurement event configured by the access network device. For example, after the first UE discovers a plurality of other UEs, the first UE may measure signal quality of response messages or announcement messages received by the first UE, for example, measure reference signal received power (reference signal received power, RSRP) of the response messages or the announcement messages. When the first UE determines, through measurement, that signal quality of a response message or an announcement message meets a signal quality threshold configured by the access network device, the first UE determines corresponding UE as the candidate relay UE. A specific measurement event configuration is not limited in this application.

It should be understood that, that the first UE determines the candidate relay UE based on a measurement event configured by the access network device may also be understood as follows: The first UE determines, based on the measurement event configured by the access network device, to report the first message. For example, when the first UE determines, through measurement, that related information of the another UE meets the measurement event, the first UE triggers reporting of the first message.

It should be understood that the foregoing process in which the first UE discovers the second UE may also be applied to the following embodiments.

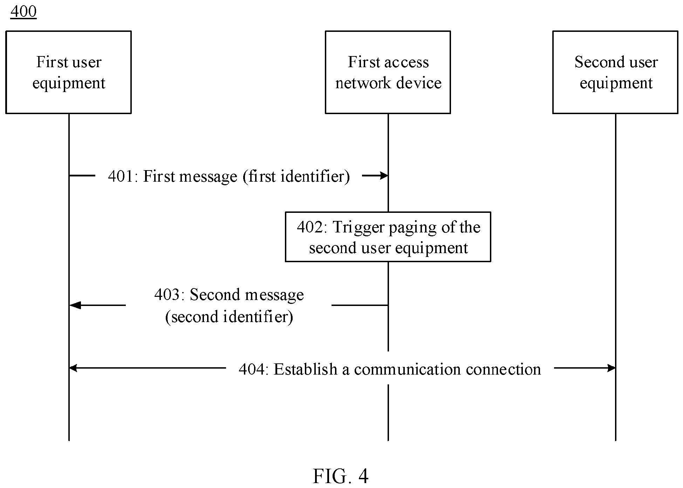

FIG. 4 is a schematic flowchart of a communication method 400 according to an embodiment of this application. As shown in FIG. 4, the communication method 400 provided in this embodiment of this application includes the following steps.

401: First UE sends a first message to a first access network device, where the first message includes a first identifier of second UE, and the first identifier is an identifier of the second UE in an RRC inactive state.

It should be understood that the first access network device is an access network device currently connected to the first UE, and the first access network device is an anchor (anchor) access network device of the second UE, in other words, the first access network device is an access network device that last serves the second UE before the second UE enters the RRC inactive state.

In this embodiment, step 401 is similar to step 201. For details, refer to the descriptions of step 201. Details are not described herein again.

402: The first access network device triggers paging of the second UE based on the first message.

It should be understood that, when the first access network device is the anchor access network device of the second UE, the first access network device may directly trigger paging of the second UE. For example, the first access network device may determine, based on an I-RNTI of the second UE in the first message, that the first access network device is the anchor access network device of the second UE. When the first message includes an identifier of the anchor access network device of the second UE, the first access network device may also determine, based on the identifier of the anchor access network device of the second UE in the first message, that the first access network device is the anchor access network device of the second UE.

For example, that the first access network device triggers paging of the second UE may specifically include: The first access network device sends, based on the I-RNTI of the second UE, RAN paging messages to all access network devices in an RNA corresponding to the I-RNTI, that is, the first access network device triggers RAN paging of the second UE.

Optionally, the RAN paging message further includes a C-RNTI and/or a layer 2 identifier (L2 ID) of the first UE.

It should be noted that when the first message includes only the first identifier of the second UE, the first access network device may directly determine the second UE as target relay UE of the first UE based on the first message, and then page the second UE. When the first message further includes an identifier of another UE, the first access network device may further determine the second UE as the target relay UE of the first UE according to a preset relay UE selection policy, and then page the second UE. For example, the first access network device may determine one of a plurality of candidate relay UEs as the target relay UE based on one or more of information such as related information (for example, signal quality of a path between each candidate relay UE and the first UE) of the candidate relay UE in the first message, a current load status of the first access network device, or a configured scheduling policy.

After the first access network device triggers paging of the second UE based on the first message, the second UE may receive the RAN paging message and resume an RRC connection. It should be understood that a process in which the second UE resumes the RRC connection includes procedures in which the second UE sends an RRC connection resume request message to the first access network device, and the first access network device returns an RRC connection resume complete message to the second UE.

Optionally, after the second UE resumes the RRC connection, an access network device to which the second UE resumes the RRC connection sends an RRC reconfiguration message to the second UE. For example, the RRC reconfiguration message includes one or more of a sidelink radio bearer SLRB configuration for the first UE, a data radio bearer DRB configuration for the first UE, an association relationship between an SLRB configuration for the first UE and a DRB configuration for the first UE, the C-RNTI of the first UE, the layer 2 identifier of the first UE, and a local identifier (local index) of the first UE that are configured by the second access network device for the second UE. It should be understood that the local identifier of the first UE is allocated by an access network device to which the second UE resumes the RRC connection.

403: The first access network device sends a second message to the first UE, where the second message indicates the first UE to perform path switching, the second message includes a second identifier of the second UE, and the second identifier is an identifier of the second UE in an RRC connected state.

After the second UE resumes the RRC connection, the first access network device may send the second message to the first UE, to indicate the first UE to perform path switching by using the second UE as the relay UE.

Optionally, the second message further includes a layer 2 identifier (L2 ID) of the second UE.

Optionally, the second message further includes the local identifier (local index) of the first UE. The local identifier may be allocated to the first UE by the access network device to which the second UE resumes the RRC connection, or may be allocated to the first UE by the second UE.

For example, the second message may be a path switch command message.

It should be understood that, when the second UE resumes the RRC connection, the access network device connected to the second UE reallocates, to the second UE, the identifier (namely, the second identifier) of the second UE in the RRC connected state. For example, the second identifier may be a cell radio network temporary identifier. Specifically, when the access network device to which the second UE resumes the RRC connection is the first access network device, the first access network device allocates the second identifier to the second UE. When the access network device to which the second UE resumes the RRC connection is not the first access network device, after allocating the second identifier to the second UE, the access network device to which the second UE resumes the RRC connection sends a message (for example, an RRC connection notification message) to the first access network device to indicate the second identifier. The first access network device may include the second identifier in the second message sent to the first UE, so as to notify the first UE that the second UE has resumed the RRC connection.

In an optional implementation, the first access network device may continuously receive a measurement report message sent by the first UE. If the measurement report message received by the first access network device includes the identifier of the second UE in the RRC connected state, the first access network device sends the second message to the first UE. To be specific, the first UE may continuously execute a UE discovery procedure, to obtain the identifier of the second UE in the RRC connected state from the second UE, and the first UE may continuously trigger reporting of the measurement report message. When the first access network device receives the identifier that is sent by the first UE and that is of the second UE in the RRC connected state, the first access network device may confirm that the second UE is already in the RRC connected state and signal quality of a path between the first UE and the second UE meets a condition, so that the first access network device may send, to the first UE, the second message for indicating the first UE to perform path switching.

404: The first UE establishes a communication connection to the second UE.

In this embodiment, step 404 is similar to step 206. For details, refer to the descriptions of step 206. Details are not described herein again.

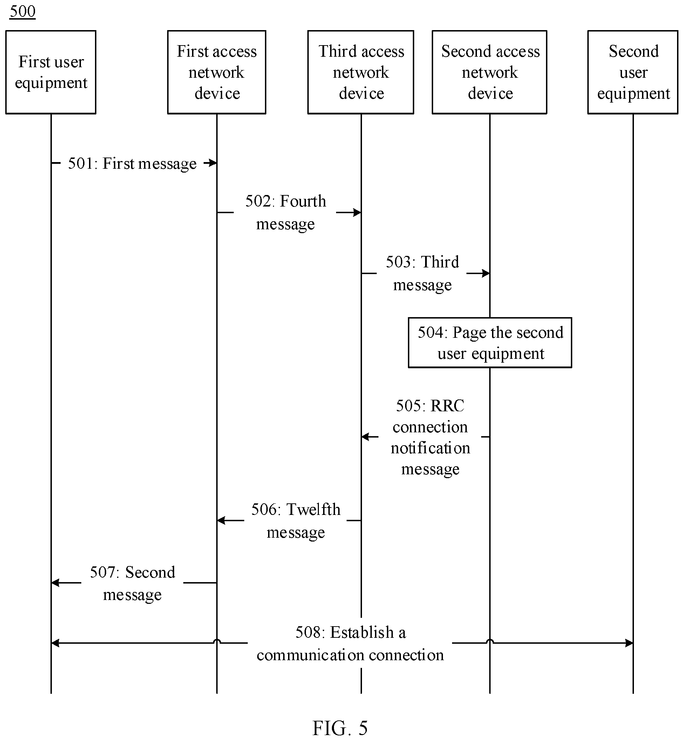

FIG. 5 is a schematic flowchart of a communication method 500 according to an embodiment of this application. As shown in FIG. 5, the communication method 500 provided in this embodiment of this application includes the following steps.

501: First UE sends a first message to a first access network device.

The first message includes a first identifier of second UE, an identifier of a second access network device, and an identifier of a third access network device. The first identifier is an identifier of the second UE in an RRC inactive state. For example, the first identifier may be an I-RNTI of the second UE. The second access network device is an anchor access network device of the second UE. The third access network device is an access network device on which the second UE camps.

In this embodiment, a manner of interaction between the first UE and the first access network device, content in the first message, and a type of the first message are similar to those in step 201. For details, refer to step 201. Details are not described herein again.

502: The first access network device sends a fourth message to the third access network device.

The fourth message includes the first identifier and the identifier of the second access network device, and the fourth message indicates the third access network device to send a third message to the second access network device. The third message includes the first identifier, and the third message indicates the second access network device to page the second UE. For example, the fourth message may be specifically a paging request (Paging Request) message, and indicates the third access network device to send, to the second access network device, the message for requesting to page the second UE. For example, the fourth message may be specifically a path switch request (Path Switch Request) message, and indicates the third access network device to send a path switch request to the second access network device.

It should be understood that when the first message includes only the first identifier of the second UE, the first access network device may directly determine the second UE as target relay UE of the first UE based on the first message, and then send the fourth message to the third access network device. When the first message further includes an identifier of another UE, the first access network device may further determine the second UE as the target relay UE of the first UE according to a preset relay UE selection policy, and then send the fourth message to the third access network device. For example, the first access network device may determine one of a plurality of candidate relay UEs as the target relay UE based on one or more of information such as related information (for example, signal quality of a path between each candidate relay UE and the first UE) of the candidate relay UE in the first message, a current load status of the first access network device, or a configured scheduling policy.

Optionally, the fourth message further includes a C-RNTI and/or a layer 2 identifier (L2 ID) of the first UE.

It should be understood that when the first access network device and the third access network device are a same access network device, step 502 and step 506 may not be performed.

It should be understood that when the second access network device and the third access network device are a same access network device, step 503 and step 505 may not be performed.

It should be understood that when the first access network device, the second access network device, and the third access network device are a same access network device, step 502, step 503, step 505, and step 506 may not be performed.

503: The third access network device sends the third message to the second access network device.

After receiving the fourth message, the third access network device may send the third message to the second access network device based on the identifier of the second access network device in the fourth message. For example, the third message may be specifically a paging request message, and is used to request the second access network device to page the second UE.

Optionally, in a specific implementation, the third message may further include an identifier of the first access network device, so that the second access network device can learn of an access network device whose first UE needs to establish a communication connection to the second UE.

Optionally, the third message further includes the C-RNTI and/or the layer 2 identifier (L2 ID) of the first UE.

For example, the third message may be specifically the paging request (Paging Request) message.

For example, the third message may be specifically a path switch request (Path Switch Request) message.

504: The second access network device pages the second UE based on the first message.

In this embodiment, step 504 is similar to step 203. For details, refer to the descriptions of step 203. Details are not described herein again.

505: The second access network device sends an RRC connection notification message to the third access network device.

It should be understood that, if an access network device to which the second UE resumes an RRC connection is the second access network device, the second access network device may send the RRC connection notification message to the third access network device based on a second identifier allocated by the second access network device to the second UE. The RRC connection notification message includes the second identifier, to indicate that the second UE is in an RRC connected state.

If an access network device to which the second UE resumes an RRC connection is not the second access network device, the access network device to which the second UE resumes the RRC connection may send an RRC connection complete notification message to the second access network device, where the RRC connection complete notification message includes a second identifier allocated to the second UE. The second access network device receives the RRC connection complete notification message, and further sends the RRC connection notification message to the third access network device.

It should be understood that the RRC connection notification complete message may also be referred to as a paging request complete message. It should be understood that the RRC connection notification message may also be referred to as a path switch accept message.

Optionally, the RRC connection complete notification message or the RRC connection notification message further includes a layer 2 identifier (L2 ID) of the second UE.

Optionally, the RRC connection complete notification message or the RRC connection notification message further includes a local identifier (local index) of the first UE. The local identifier may be allocated to the first UE by the access network device to which the second UE resumes the RRC connection, or may be allocated to the first UE by the second UE.

Optionally, in a specific implementation, the access network device to which the second UE resumes the RRC connection may directly send the RRC connection notification message to the first access network device. The RRC connection notification message includes one or more of the second identifier allocated to the second UE, the layer 2 identifier (L2 ID) of the second UE, and the local identifier (local index) of the first UE. It should be understood that, in this case, step 505 and step 506 may not be performed.

506: The third access network device sends a twelfth message to the first access network device, where the twelfth message includes the second identifier.

After the third access network device receives the RRC connection notification message sent by the second access network device, the third access network device sends the twelfth message to the first access network device, to indicate that the second UE is in the RRC connected state. For example, the twelfth message may be specifically an RRC connection notification message.

For example, the twelfth message may be specifically a path switch accept message.

Optionally, the twelfth message further includes the layer 2 identifier (L2 ID) of the second UE.

Optionally, the twelfth message further includes the local identifier (local index) of the first UE. The local identifier may be allocated to the first UE by the access network device to which the second UE resumes the RRC connection, or may be allocated to the first UE by the second UE.

507: The first access network device sends a second message to the first UE, where the second message indicates the first UE to perform path switching, the second message includes the second identifier of the second UE, and the second identifier is the identifier of the second UE in the RRC connected state.

In this embodiment, step 507 is similar to step 203. For details, refer to the descriptions of step 203. Details are not described herein again.

508: The first UE establishes the communication connection to the second UE.

In this embodiment, step 508 is similar to step 206. For details, refer to the descriptions of step 206. Details are not described herein again.

In this embodiment, an access network device of remote UE sends a paging request message to an anchor access network device of relay UE via an access network device on which the relay UE camps, so that when the access network device of the remote UE is far away from the anchor access network device of the relay UE or there is no direct communication interface between the two access network devices, it can be ensured that the access network device of the remote UE can successfully send the paging request message to the anchor access network device of the relay UE, to ensure normal paging of the relay UE. In this way, the remote UE can communicate with a network via the relay UE that resumes an RRC connection, so that communication quality of the remote UE is ensured.

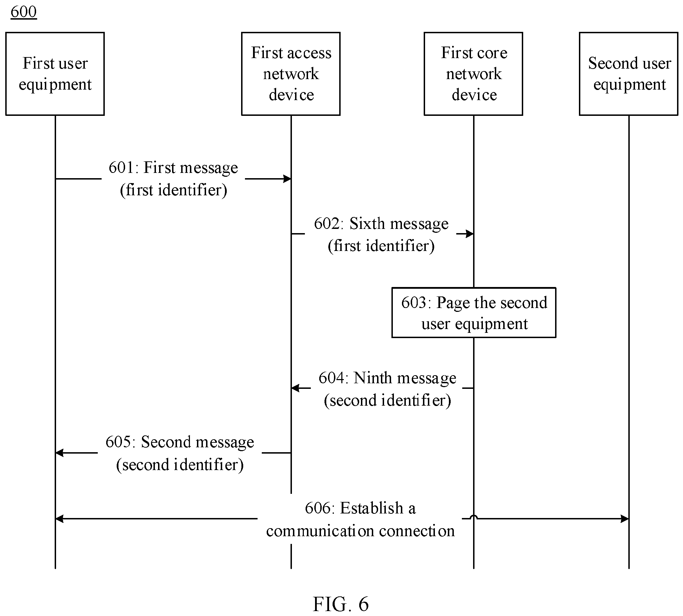

FIG. 6 is a schematic flowchart of a communication method 600 according to an embodiment of this application. As shown in FIG. 6, the communication method 600 provided in this embodiment of this application includes the following steps.

601: First UE sends a first message to a first access network device.

The first message includes a first identifier of second UE, and the first identifier is an identifier of the second UE in an RRC idle state. For example, the first identifier may be a 5G system architecture evolution temporary mobile subscriber identity (5G-SAE-Temporary mobile subscriber identity, 5G-S-TMSI) of the second UE, and some fields in the 5G-S-TMSI are used to identify core network information. That is, a core network device corresponding to the second UE may be determined based on the 5G-S-TMSI of the second UE. For example, the first identifier may alternatively be a globally unique temporary identity (globally unique temporary identity, GUTI) of the second UE. Alternatively, the first identifier may be another identifier in the RRC idle state. This is not limited in embodiments of this application.

Optionally, the first message further includes an identifier of an access network device on which the second UE camps.

For example, the first message is a measurement report (Measurement Report) message.

It should be understood that the first access network device is an access network device to which the first UE is currently connected. The first UE may interact with the first access network device in a plurality of manners. For example, when the first UE communicates with a network through a direct path, the first UE may directly exchange a message with the first access network device. When the first UE communicates with the network through an indirect path, the first UE may exchange a message with the first access network device via currently connected relay UE. This is not specifically limited in embodiments of this application.

It should be understood that, in a possible implementation, the first message includes only related information of the second UE, in other words, candidate relay UE determined by the first UE includes only the second UE. In another possible implementation, in addition to related information of the second UE, the first message may further include related information of another UE, that is, there are a plurality of candidate relay UEs determined by the first UE.

Optionally, in some specific embodiments, the first message may further include one or more of the following quality: signal quality of a path between the first UE and the second UE, signal quality of a path between the first UE and an access network device, and signal quality of a path between the second UE and an access network device.

Optionally, the first message further includes a layer 2 identifier (L2 ID) of the first UE.

602: The first access network device sends a sixth message to a first core network device.

The sixth message includes the first identifier, and the sixth message indicates the first core network device to page the second UE. The first core network device is a core network device corresponding to the first UE, in other words, the first core network device is a core network device that stores a related context of the first UE.

It should be understood that when the first message includes only the first identifier of the second UE, the first access network device may directly determine the second UE as target relay UE of the first UE based on the first message, and then send the sixth message to the first core network device. When the first message further includes an identifier of another UE, the first access network device may further determine the second UE as the target relay UE of the first UE according to a preset relay UE selection policy, and then send the sixth message to the first core network device. For example, the first access network device may determine one of the plurality of candidate relay UEs as the target relay UE based on one or more of information such as related information (for example, signal quality of a path between each candidate relay UE and the first UE) of the candidate relay UE in the first message, a current load status of the first access network device, or a configured scheduling policy. It may be understood that the first UE may have the plurality of candidate target relay UEs, and the first access network device determines one of the plurality of candidate target relay UEs as the target relay UE according to a selection rule or based on a selection condition. The selection rule or selection condition is not limited in embodiments of this application.

It should be understood that, after the first access network device determines the second UE as the relay UE of the first UE, the first access network device may determine, based on the first identifier of the second UE, that the second UE is in the RRC idle state, in other words, the second UE needs to be paged through CN paging. Therefore, the first access network device sends the sixth message to the first core network device.

For example, the sixth message may be a paging request (Paging Request) message.

Optionally, the sixth message further includes the identifier of the access network device on which the second UE camps.

Optionally, the sixth message further includes a C-RNTI and/or the layer 2 identifier (L2 ID) of the first UE.

603: The first core network device pages the second UE.

In this embodiment, after receiving the sixth message sent by the first access network device, the first core network device may determine, based on the first identifier carried in the sixth message, the core network device corresponding to the second UE. When the first core network device determines that the first core network device is the core network device corresponding to the second UE, that is, when the first core network device stores a related context of the second UE, the first core network device may trigger CN paging to page the second UE. Specifically, for a process in which the first core network device pages the second UE, refer to the foregoing descriptions of CN paging. Details are not described herein again. For example, the first core network device may send, based on the 5G-S-TMSI of the second UE, CN paging messages to all access network devices in a TA area corresponding to the 5G-S-TMSI, so that all the access network devices in the TA area broadcast the paging messages in respective cells.

Optionally, the CN paging message further includes an identifier of the first access network device.

Optionally, the CN paging message further includes the C-RNTI and/or the layer 2 identifier (L2 ID) of the first UE.

It should be understood that, after the second UE receives the paging message sent by the access network device, the second UE may send an RRC connection establishment request message to the access network device, to establish an RRC connection. For example, establishing the RRC connection includes procedures in which the second UE sends the RRC connection establishment request message, the access network device sends an RRC connection establishment message, and the second UE sends an RRC establishment complete message.

Optionally, after the second UE establishes the RRC connection, an access network device to which the second UE establishes the RRC connection sends an RRC reconfiguration message to the second UE. For example, the RRC reconfiguration message includes one or more of a sidelink radio bearer SLRB configuration for the first UE, a data radio bearer DRB configuration for the first UE, an association relationship between an SLRB configuration for the first UE and a DRB configuration for the first UE, the C-RNTI of the first UE, the layer 2 identifier of the first UE, and a local identifier (local index) of the first UE that are configured by the second access network device for the second UE. It should be understood that the local identifier of the first UE is allocated by the access network device to which the second UE establishes the RRC connection.

604: The first core network device sends a ninth message to the first access network device, where the ninth message includes a second identifier.

It should be understood that, when the second UE establishes the RRC connection, the access network device to which the second UE establishes the RRC connection allocates an identifier (namely, the second identifier) of the second UE in an RRC connected state to the second UE, and may send an RRC connection notification message to the first core network device. The RRC connection notification message carries the second identifier, to indicate that the second UE is in the RRC connected state. Therefore, after receiving the RRC connection notification message, the first core network device may send the ninth message to the first access network device.

Optionally, the RRC connection notification message further includes a layer 2 identifier (L2 ID) of the second UE and/or the local identifier (local index) of the first UE. The local identifier may be allocated to the first UE by the access network device to which the second UE resumes the RRC connection, or may be allocated to the first UE by the second UE. For example, the ninth message may be specifically a paging request complete (Paging Request Complete) message, and is used to notify the first access network device that a paging request has been completed.

For example, the ninth message may alternatively be an RRC connection notification (RRC Connection Notification) message.

For example, the ninth message may alternatively be a path switch complete (path switch complete) message.

Optionally, in a possible implementation, the access network device to which the second UE establishes the RRC connection may alternatively directly send the RRC connection notification message to the first access network device, and include the second identifier in the RRC connection notification message, to indicate that the second UE is in the RRC connected state. The RRC connection notification message includes one or more of the second identifier allocated to the second UE, the layer 2 identifier (L2 ID) of the second UE, and the local identifier (local index) of the first UE. It should be understood that in this case, step 604 may not be performed.

Optionally, the ninth message further includes the layer 2 identifier (L2 ID) of the second UE.

Optionally, the ninth message further includes the local identifier (local index) of the first UE.

605: The first access network device sends a second message to the first UE, where the second message indicates the first UE to perform path switching, the second message includes the second identifier of the second UE, and the second identifier is the identifier of the second UE in the RRC connected state.

Optionally, the second message further includes an identifier of the access network device to which the second UE establishes the RRC connection.

Optionally, the second message further includes the layer 2 identifier (L2 ID) of the second UE.

Optionally, the second message further includes the local identifier (local index) of the first UE.

For example, the second message is a path switch command (path switch command) message.

In this embodiment, step 605 is similar to step 205. For details, refer to the descriptions of step 205. Details are not described herein again.

606: The first UE establishes a communication connection to the second UE.

In this embodiment, step 606 is similar to step 206. For details, refer to the descriptions of step 206. Details are not described herein again.

In this embodiment of this application, when target relay UE is in an RRC idle state, an access network device of remote UE sends a paging request message to a core network device corresponding to the remote UE. When a core network device corresponding to the target relay UE and the core network device corresponding to the remote UE are a same core network device, the target relay UE is paged via the core network device corresponding to the remote UE, so that the remote UE can communicate with a network via the relay UE that establishes an RRC connection, thereby ensuring communication quality of the remote UE.

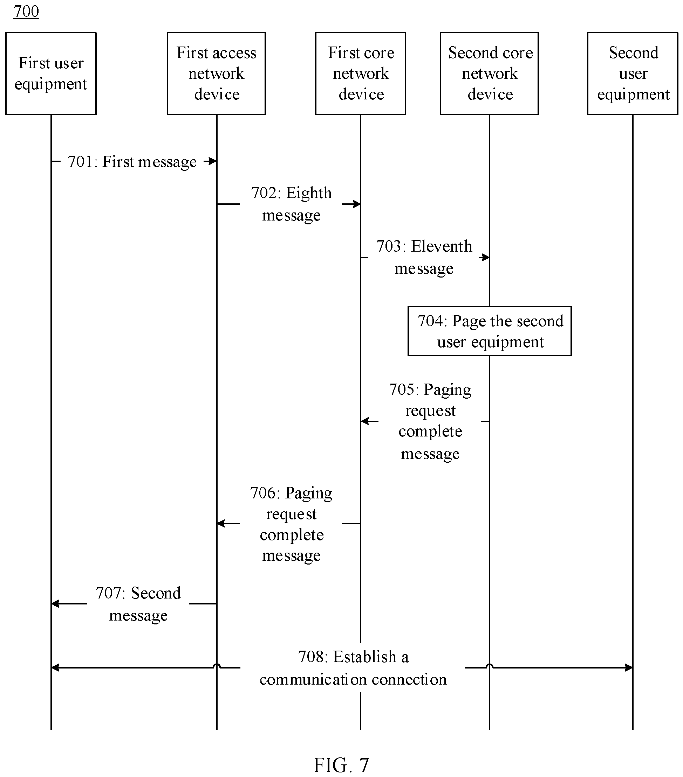

FIG. 7 is a schematic flowchart of a communication method 700 according to an embodiment of this application. As shown in FIG. 7, the communication method 700 provided in this embodiment of this application includes the following steps.

701: First UE sends a first message to a first access network device.

In this embodiment, step 701 is similar to step 601. For details, refer to the descriptions of step 601. Details are not described herein again.

702: The first access network device sends an eighth message to a first core network device, where the eighth message includes a first identifier.

Optionally, the eighth message may indicate the first core network device to send an eleventh message to a second core network device, the eleventh message includes the first identifier, and the eleventh message indicates the second core network device to page second UE. It should be understood that the first access network device may determine, based on the first identifier, that a core network device corresponding to the second UE is the second core network device. Because the first access network device cannot directly communicate with the second core network device, the first access network device may send the eighth message to the first core network device, to indicate the first core network device to send a paging request message to the second core network, so that the second core network triggers paging of the second UE. The first core network device is a core network device corresponding to the first

UE.

It should be understood that a core network device corresponding to UE is a core network device that maintains a related context of the UE.

Optionally, the first access network device may not determine, based on the first identifier, the core network device corresponding to the second UE, but directly send the eighth message to the first core network device, where the eighth message includes the first identifier. The first core network device determines, based on the first identifier in the eighth message, that the core network device corresponding to the second UE is the second core network device, and the first core network device sends the eleventh message to the second core network device, where the eleventh message includes the first identifier, and the eleventh message indicates the second core network device to page the second UE.

For example, the eighth message is a paging request message.

Optionally, the eighth message further includes a C-RNTI and/or a layer 2 identifier (L2 ID) of the first UE.

703: The first core network device sends the eleventh message to the second core network device.

After receiving the eighth message sent by the first access network device, the first core network device may determine, based on the first identifier in the eighth message, that the core network device corresponding to the second UE is the second core network device, and then send the eleventh message to the second core network device. For example, the eleventh message may be specifically the paging request message, and is used to request the second core network device to page the second UE.

Optionally, in a specific implementation, the eleventh message may further include an identifier of the first access network device, so that the second core network can learn of an access network device whose first UE needs to establish a communication connection to the second UE.

Optionally, the eleventh message further includes the C-RNTI and/or the layer 2 identifier (L2 ID) of the first UE.

704: The second core network device pages the second UE based on the eleventh message.

After receiving the eleventh message, the second core network device may trigger CN paging based on the first identifier in the eleventh message, to page the second UE. Specifically, for a process in which the second core network device pages the second UE, refer to the foregoing descriptions of CN paging. Details are not described herein again. For example, the second core network device may send, based on a 5G-S-TMSI of the second UE, CN paging messages to all access network devices in a TA area corresponding to the 5G-S-TMSI, so that all the access network devices in the TA area broadcast the paging messages in respective cells.

Optionally, the CN paging message further includes the identifier of the first access network device.

Optionally, the CN paging message further includes the C-RNTI and/or the layer 2 identifier (L2 ID) of the first UE.

It should be understood that, after the second UE receives the paging message sent by the access network device, the second UE may send an RRC connection establishment request message to the access network device, to establish an RRC connection. For example, establishing the RRC connection includes procedures in which the second UE sends the RRC connection establishment request message, the access network device sends an RRC connection establishment message to the second UE, and the second UE sends an RRC establishment complete message to the access network device.

Optionally, after the second UE establishes the RRC connection, an access network device to which the second UE establishes the RRC connection sends an RRC reconfiguration message to the second UE. For example, the RRC reconfiguration message includes one or more of a sidelink radio bearer SLRB configuration for the first UE, a data radio bearer DRB configuration for the first UE, an association relationship between an SLRB configuration for the first UE and a DRB configuration for the first UE, the C-RNTI of the first UE, the layer 2 identifier of the first UE, and a local identifier (local index) of the first UE that are configured by the second access network device for the second UE. It should be understood that the local identifier of the first UE is allocated by the access network device to which the second UE establishes the RRC connection.

705: The second core network device sends a paging request complete message to the first core network device.

It should be understood that, when the second UE establishes the RRC connection, the access network device to which the second UE establishes the RRC connection allocates an identifier (namely, a second identifier) of the second UE in an RRC connected state to the second UE, and may send an RRC connection notification message to the second core network device. The RRC connection notification message carries the second identifier, to indicate that the second UE is in the RRC connected state. Therefore, corresponding to step 703, after receiving the RRC connection notification message, the second core network device may send the paging request complete message to the first core network device, to notify the first core network device that a paging request has been completed.

For example, the paging request message may alternatively be a path switch complete message.

Optionally, in a possible implementation, the access network device to which the second UE establishes the RRC connection may further.

Optionally, the RRC connection notification message further includes a layer 2 identifier (L2 ID) of the second UE and/or the local identifier (local index) of the first UE. The local identifier may be allocated to the first UE by the access network device to which the second UE resumes the RRC connection, or may be allocated to the first UE by the second UE.

Optionally, the paging request complete message further includes an identifier of the access network device to which the second UE establishes the RRC connection.

Optionally, the paging request complete message further includes the layer 2 identifier (L2 ID) of the second UE and/or the local identifier (local index) of the first UE.

Optionally, in a possible implementation, the access network device connected to the second UE may alternatively directly send the RRC connection notification message to the first access network device, and include one or more of the second identifier of the second UE, the layer 2 identifier (L2 ID) of the second UE, and the local identifier (local index) of the first UE in the RRC connection notification message, to indicate that the second UE is in the RRC connected state. It should be understood that in this case, steps 705 and 706 may not be performed.

706: The first core network device sends a paging request complete message to the first access network device.

Corresponding to step 702, after receiving the paging request complete message sent by the second core network device, the first core network device may send the paging request complete message to the first access network device, to notify the first access network device that the paging request has been completed.

For example, the paging request message sent by the first core network device may alternatively be a path switch complete message.

Optionally, the paging request complete message further includes the identifier of the access network device to which the second UE establishes the RRC connection.

Optionally, the paging request complete message further includes the layer 2 identifier (L2 ID) of the second UE and/or the local identifier (local index) of the first UE. The local identifier may be allocated to the first UE by the access network device to which the second UE resumes the RRC connection, or may be allocated to the first UE by the second UE.

707: The first access network device sends a second message to the first UE, where the second message indicates the first UE to perform path switching, the second message includes the second identifier of the second UE, and the second identifier is the identifier of the second UE in the RRC connected state.

Optionally, the second message further includes the identifier of the access network device to which the second UE establishes the RRC connection.

Optionally, the second message further includes the layer 2 identifier (L2 ID) of the second UE and/or the local identifier (local index) of the first UE. The local identifier may be allocated to the first UE by the access network device to which the second UE resumes the RRC connection, or may be allocated to the first UE by the second UE.

For example, the second message is a path switch command message.

In this embodiment, step 707 is similar to step 205. For details, refer to the descriptions of step 205. Details are not described herein again.

708: The first UE establishes the communication connection to the second UE.

In this embodiment, step 708 is similar to step 206. For details, refer to the descriptions of step 206. Details are not described herein again.

In this embodiment of this application, when target relay UE is in an RRC idle state, an access network device of remote UE sends, via a core network device corresponding to the remote UE, a paging request message to a core network device corresponding to the relay UE, and the core network device corresponding to the relay UE pages the target relay UE, so that the remote UE can communicate with a network via the target relay UE that establishes an RRC connection, thereby ensuring communication quality of the remote UE.

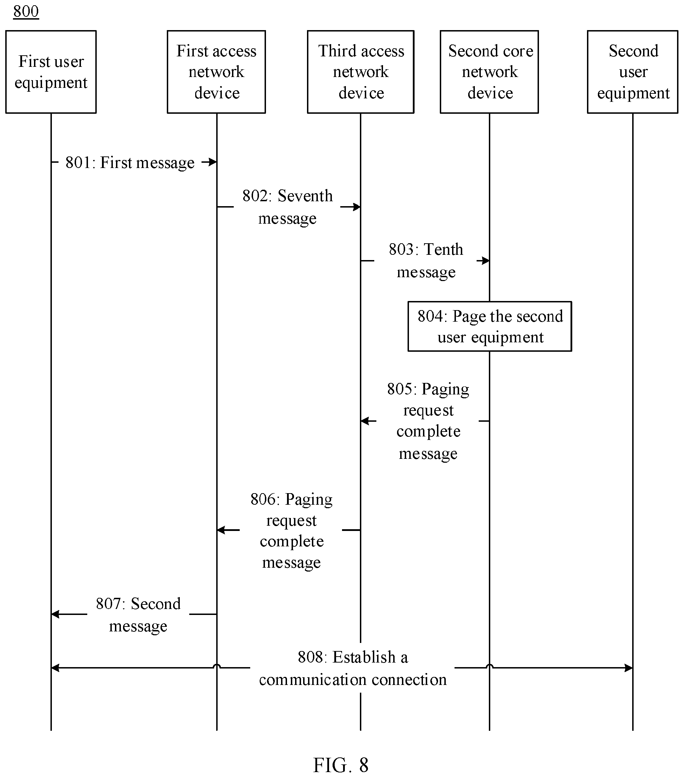

FIG. 8 is a schematic flowchart of a communication method 800 according to an embodiment of this application. As shown in FIG. 8, the communication method 800 provided in this embodiment of this application includes the following steps.

801: First UE sends a first message to a first access network device.

The first message includes a first identifier of second UE and an identifier of a third access network device. The first identifier is an identifier of the second UE in an RRC idle state. For example, the first identifier may be a 5G-S-TMSI of the second UE. For example, the first identifier may be a GUTI of the second UE. The third access network device is an access network device on which the second UE camps. For example, the first message is a measurement report message.

It should be understood that the first access network device is an access network device to which the first UE is currently connected. The first UE may interact with the first access network device in a plurality of manners. For example, when the first UE communicates with a network through a direct path, the first UE may directly exchange a message with the first access network device. When the first UE communicates with the network through an indirect path, the first UE may exchange a message with the first access network device via currently connected relay UE. This is not specifically limited in embodiments of this application.

It should be understood that, in a possible implementation, the first message includes only related information of the second UE, in other words, candidate relay UE determined by the first UE includes only the second UE. In another possible implementation, in addition to related information of the second UE, the first message may further include related information of another UE, that is, there are a plurality of candidate relay UEs determined by the first UE.

Optionally, in some specific embodiments, the first message may further include one or more of the following quality: signal quality of a path between the first UE and the second UE, signal quality of a path between the first UE and an access network device, and signal quality of a path between the second UE and an access network device.

Optionally, the first message further includes a layer 2 identifier (L2 ID) of the first UE.

802: The first access network device sends a seventh message to the third access network device.

The seventh message includes the first identifier of the second UE, the seventh message indicates the third access network device to send a tenth message to a second core network device, the tenth message includes the first identifier, the tenth message indicates the second core network device to page the second UE, and the second core network device is a core network device corresponding to the second UE.

It should be understood that the core network device corresponding to the second UE is a core network device that stores a related context of the second UE.

For example, the seventh message is a paging request message.

For example, the seventh message is a path switch request message.

It should be understood that when the first message includes only the first identifier of the second UE, the first access network device may directly determine the second UE as target relay UE of the first UE based on the first message, and then send the seventh message to the third access network device. When the first message further includes an identifier of another UE, the first access network device may further determine the second UE as the target relay UE of the first UE according to a preset relay UE selection policy, and then send the seventh message to the third access network device. For example, the first access network device may determine one of the plurality of candidate relay UEs as the target relay UE based on one or more of information such as related information (for example, signal quality of a path between each candidate relay UE and the first UE) of the candidate relay UE in the first message, a current load status of the first access network device, or a configured scheduling policy.

It should be understood that, after the first access network device determines the second UE as the relay UE of the first UE, the first access network device may determine, based on the first identifier of the second UE, that the second UE is in the RRC idle state, in other words, the second UE needs to be paged through CN paging. Because the first message further includes the identifier of the third access network device, the first access network device may send the seventh message to the third access network device, to indicate the third access network device to send the tenth message to the second core network device.

Optionally, the seventh message further includes a C-RNTI and/or the layer 2 identifier (L2 ID) of the first UE.

803: The third access network device sends the tenth message to the second core network device.

After receiving the seventh message, the third access network device may determine, based on the first identifier of the second UE in the seventh message, an identifier of the core network device corresponding to the second UE, and send the tenth message to the second core network device. For example, the tenth message may be specifically a paging request message, and is used to request the second core network device to page the second UE. For example, the tenth message may be specifically a path switch request message.

Optionally, in a specific implementation, the tenth message may further include an identifier of the first access network device, so that the second core network device can learn of an access network device whose first UE needs to establish a communication connection to the second UE.

Optionally, the tenth message further includes the C-RNTI and/or the layer 2 identifier (L2 ID) of the first UE.

804: The second core network device pages the second UE.

Optionally, after receiving the tenth message sent by the first access network device, the second core network device may determine, based on the first identifier carried in the tenth message, that the core network device corresponding to the second UE is the second core network device, and the second core network device may trigger CN paging to page the second UE. Specifically, for a process in which the second core network device pages the second UE, refer to the foregoing descriptions of CN paging. Details are not described herein again. For example, the second core network device may send, based on the 5G-S-TMSI of the second UE, CN paging messages to all access network devices in a TA area corresponding to the 5G-S-TMSI, so that all the access network devices in the TA area broadcast the paging messages in respective cells.

Optionally, the CN paging message further includes the identifier of the first access network device, so that the second UE can learn of an access network device whose UE needs to establish the communication connection to the second UE.

Optionally, the CN paging message further includes the C-RNTI and/or the layer 2 identifier (L2 ID) of the first UE.

It should be understood that, after the second UE receives the paging message of the access network device, the second UE may send an RRC connection establishment request message to the access network device, to establish an RRC connection. For example, establishing the RRC connection includes procedures in which the second UE sends the RRC connection establishment request message, the access network device sends an RRC connection establishment message to the second UE, and the second UE sends an RRC connection establishment complete message to the access network device.

Optionally, after the second UE establishes the RRC connection, an access network device to which the second UE establishes the RRC connection sends an RRC reconfiguration message to the second UE. For example, the RRC reconfiguration message includes one or more of a sidelink radio bearer SLRB configuration for the first UE, a data radio bearer DRB configuration for the first UE, an association relationship between an SLRB configuration for the first UE and a DRB configuration for the first UE, the C-RNTI of the first UE, the layer 2 identifier of the first UE, and a local identifier (local index) of the first UE that are configured by the second access network device for the second UE. It should be understood that the local identifier of the first UE is allocated by the access network device to which the second UE establishes the RRC connection.

805: The second core network device sends a paging request complete (Paging Request Complete) message to the third access network device.

It should be understood that, when the second UE establishes the RRC connection, the access network device connected to the second UE allocates an identifier (namely, a second identifier) of the second UE in an RRC connected state to the second UE, and may send an RRC connection notification message to the second core network device. The RRC connection notification message carries the second identifier, to indicate that the second UE is in the RRC connected state. Therefore, corresponding to step 803, after receiving the RRC connection notification message, the second core network device may send the paging request complete message to the third access network device, to notify the third access network device that a paging request has been completed.

For example, the paging request complete message may alternatively be a path switch complete message.

Optionally, the paging request complete message further includes an identifier of the access network device connected to the second UE.

Optionally, the paging request complete message further includes a layer 2 identifier (L2 ID) of the second UE and/or the local identifier (local index) of the first UE. The local identifier may be allocated to the first UE by the access network device to which the second UE resumes the RRC connection, or may be allocated to the first UE by the second UE.

Optionally, in a possible implementation, the access network device connected to the second UE may alternatively directly send the RRC connection notification message to the first access network device, and include one or more of the second identifier of the second UE, the layer 2 identifier of the second UE, and the local identifier of the first UE in the RRC connection notification message, to indicate that the second UE is in the RRC connected state. It should be understood that in this case, steps 805 and 806 may not be performed.

806: The third access network device sends a paging request complete message to the first access network device.

Corresponding to step 802, after receiving the paging request complete message, the third access network device may send the paging request complete message to the first access network device, to notify the first access network device that the paging request has been completed.

Optionally, the paging request complete message sent by the third access network device further includes the identifier of the access network device connected to the second UE.

Optionally, the paging request complete message sent by the third access network device further includes the layer 2 identifier (L2 ID) of the second UE and/or the local identifier (local index) of the first UE. The local identifier may be allocated to the first UE by the access network device to which the second UE resumes the RRC connection, or may be allocated to the first UE by the second UE.

807: The first access network device sends a second message to the first UE, where the second message indicates the first UE to perform path switching, the second message includes the second identifier of the second UE, and the second identifier is the identifier of the second UE in the RRC connected state.

Optionally, the second message further includes the identifier of the access network device connected to the second UE.

Optionally, the second message further includes the layer 2 identifier (L2 ID) of the second UE and/or the local identifier (local index) of the first UE. The local identifier may be allocated to the first UE by the access network device to which the second UE resumes the RRC connection, or may be allocated to the first UE by the second UE.

For example, the second message is a path switch command message.

In this embodiment, step 808 is similar to step 205. For details, refer to the descriptions of step 205. Details are not described herein again.

808: The first UE establishes the communication connection to the second UE.

In this embodiment, step 808 is similar to step 206. For details, refer to the descriptions of step 206. Details are not described herein again.

In this embodiment of this application, when target relay UE is in an RRC idle state, an access network device of remote UE sends, via an access network device on which the relay UE camps, a paging request message to a core network device corresponding to the relay UE, and the core network device corresponding to the relay UE pages the target relay UE, so that the remote UE can communicate with a network via the target relay UE that establishes an RRC connection, thereby ensuring communication quality of the remote UE.

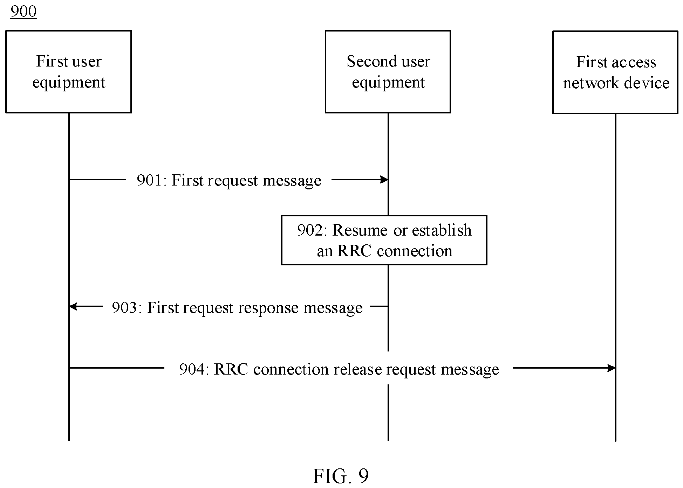

FIG. 9 is a schematic flowchart of a communication method 900 according to an embodiment of this application. As shown in FIG. 9, the communication method 900 provided in this embodiment of this application includes the following steps.

901: First UE sends a first request message to second UE, where the first request message is used to request the second UE to resume or establish an RRC connection.

After the first UE determines the second UE as target relay UE, the first UE may send the first request message to the second UE, to request the second UE to resume or establish the RRC connection.

Optionally, the first request message may be specifically a solicitation message, in other words, the first UE indicates, in the solicitation message sent to the second UE, the second UE to resume or establish the RRC connection. Alternatively, the first request message may be specifically a PC5-S connection establishment request (Direct Communication Request) message, in other words, the first UE indicates, in the PC5-S connection establishment request message sent to the second UE, the second UE to resume or establish the RRC connection. Alternatively, the first request message may be specifically another PC5-S message or a PC5-RRC message, in other words, after the first UE establishes a PC5-S connection to the second UE, the first UE may indicate, in the PC5-S message or the PC5-RRC message sent to the second UE, the second UE to resume or establish the RRC connection.

Optionally, in a specific implementation, the first request message may include identification information of the second UE and/or identification information of an access network device on which the second UE camps.

For example, the identification information of the second UE is an I-RNTI or a 5G-S-TMSI.

For example, the identification information of the access network device on which the second UE camps is a physical cell identifier (physical cell identifier, PCI) or a cell global identifier (cell global identifier, CGI).

Optionally, in a specific implementation, the first request message may include identification information of the first UE and/or identification information of an access network device on which the first UE camps.

For example, the identification information of the first UE is an I-RNTI or a 5G-S-TMSI.

For example, the identification information of the access network device on which the first UE camps is a PCI or a CGI.

902: The second UE resumes or establishes the RRC connection.

After the second UE receives the first request message, if the second UE is in an RRC inactive state, the second UE may send an RRC resume request message to a second access network device corresponding to the second UE, to resume the RRC connection; if the second UE is in an RRC idle state, the second UE may send an RRC establishment request message to a second access network device, to establish the RRC connection to the second access network device. It should be understood that the second access network device corresponding to the second UE may be the access network device on which the second UE camps.

Optionally, when the second UE establishes the RRC resume or the RRC connection, the RRC connection resume request message or the RRC connection establishment request message sent by the second UE to the second access network device includes one or more of a layer 2 identifier of the first UE, a local identifier (local index) of the first UE, a C-RNTI of the first UE, and a cell identifier of the first UE. It should be understood that the local identifier of the first UE is allocated by the second UE to the first UE.

Optionally, when the second UE establishes the RRC resume or the RRC connection, an RRC connection resume message or an RRC connection establishment message sent by the second access network device to the second UE includes one or more of the layer 2 identifier of the first UE, the local identifier (local index) of the first UE, the C-RNTI of the first UE, and the cell identifier of the first UE. It should be understood that the local identifier of the first UE is allocated by the second access network device.

Optionally, after the second UE establishes the RRC resume or the RRC connection, an RRC message sent by the second UE to the second access network device includes one or more of the layer 2 identifier of the first UE, the local identifier (local index) of the first UE, the C-RNTI of the first UE, and the cell identifier of the first UE. It should be understood that the local identifier of the first UE is allocated by the second UE to the first UE.

Optionally, after the second UE establishes the RRC resume or the RRC connection, an RRC reconfiguration message sent by the second access network device to the second UE includes one or more of a sidelink radio bearer SLRB configuration for the first UE, a data radio bearer DRB configuration for the first UE, an association relationship between an SLRB configuration for the first UE and a DRB configuration for the first UE, the C-RNTI of the first UE, the layer 2 identifier of the first UE, and the local identifier (local index) of the first UE that are configured by the second access network device for the second UE. It should be understood that the local identifier of the first UE is allocated by the second access network device.

903: The second UE sends a first request response message to the first UE, where the first request response message indicates that the second UE is in an RRC connected state.

After the second UE resumes or establishes the RRC connection, the second UE may send the first request response message to the first UE, so that the first UE can learn that the second UE is already in the RRC connected state.

Optionally, the first request response message may be specifically a response message, and the second UE indicates, in the response message sent to the first UE, that the second UE is already in the RRC connected state. Alternatively, the first request response message may be specifically a PC5-S connection establishment complete (Direct Communication Complete) message, in other words, the second UE indicates, in the PC5-S connection establishment complete message sent to the first UE, that the second UE is already in the RRC connected state. Alternatively, the first request response message may be specifically another PC5-S message or a PC5-RRC message, in other words, after the first UE establishes the PC5-S connection to the second UE, the second UE may indicate, in the PC5-S message or the PC5-RRC message sent to the first UE, that the second UE is in the RRC connected state.

904: The first UE sends an RRC connection release request (RRC Connection Release Request) message to a first access network device.

After the first UE learns that the second UE is in the RRC connected state, the first UE may send the RRC connection release request message to the first access network device, to request to disconnect an RRC connection between the first UE and the first access network device. Optionally, the first access network device may send information about an SN status transfer of the first UE to the access network device accessed by the second UE, so that the second access network device accessed by the second UE delivers reconfiguration information to the second UE, to provide the second UE with the configuration for serving the first UE.

Optionally, the RRC connection release request message includes an identifier of the access network device to which the second UE resumes or establishes the RRC connection and/or an identifier of the second UE.

Optionally, in a specific implementation, after the first UE learns that the second UE is in the RRC connected state, if there is an indirect path between the first UE and the first access network device currently, the first UE may release a sidelink SL communication connection to current relay UE on the indirect path. It should be understood that, that the first UE releases the communication connection to the current relay UE means: An access stratum of the first UE indicates a PC5-S layer of the first UE to release the communication connection.

In this embodiment, remote UE directly sends a first request message to relay UE, so that the relay UE can resume or establish an RRC connection. This ensures that the remote UE can communicate with a network via the relay UE that resumes or establishes the RRC connection, so that communication quality of the remote UE is ensured.

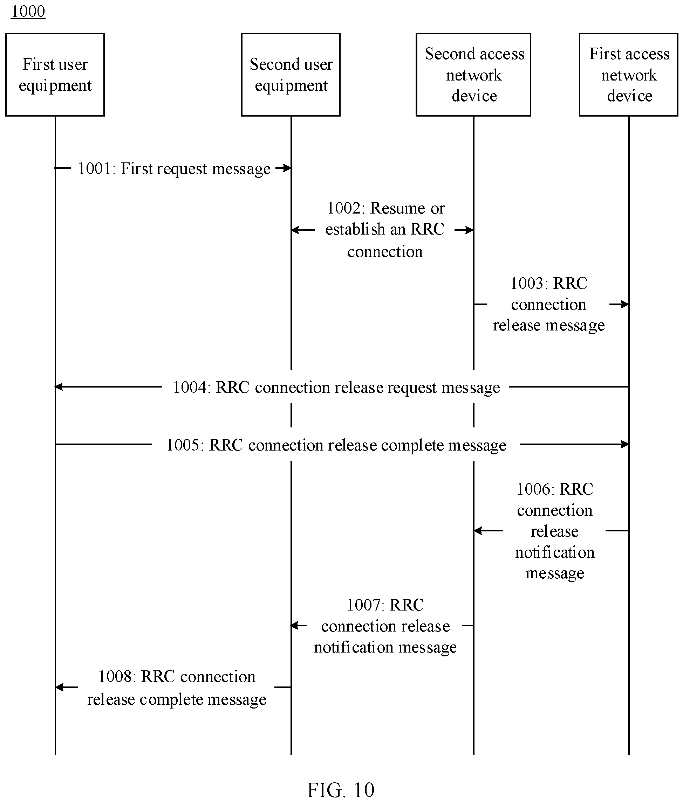

FIG. 10 is a schematic flowchart of a communication method 1000 according to an embodiment of this application. As shown in FIG. 10, the communication method 1000 provided in this embodiment of this application includes the following steps.

1001: First UE sends a first request message to second UE, where the first request message is used to request the second UE to resume or establish an RRC connection.

In this embodiment, step 1001 is similar to step 901. For details, refer to the descriptions of step 901. Details are not described herein again. In addition, the first request message further includes identification information of a first access network device connected to the first UE and/or identification information of the first UE.

For example, the identification information of the first UE is a C-RNTI.

For example, cell identification information of the first UE is a physical cell identifier or a global cell identifier.

1002: The second UE resumes or establishes the RRC connection.

In this embodiment, step 1002 is similar to step 902. For details, refer to the descriptions of step 902. Details are not described herein again. In addition, an RRC connection resume message or an RRC connection establishment message sent by the second UE to a second access network device further includes an identifier of the first access network device accessed by the first UE and/or the identification information of the first UE.

1003: The second access network device connected to the second UE sends an RRC connection release request (RRC connection release request) message to the first access network device connected to the first UE.

After the second UE resumes or establishes the RRC connection, the second access network device connected to the second UE determines the first access network device based on the identifier of the first access network device, and then sends the RRC connection release request message to the first access network device.

It should be understood that the RRC connection release request message includes the identification information of the first UE.

Optionally, the RRC connection release request message sent by the second access network device to the first access network device further includes an identifier of the second UE in an RRC connected state, for example, may be a C-RNTI of the second UE.

1004: The first access network device sends an RRC connection release request message to the first UE.

Optionally, the RRC connection release request message further includes the C-RNTI of the second UE and/or cell identification information of the second UE.

For example, the cell identification information of the second UE is a physical cell identifier or a global cell identifier.

1005: The first UE returns an RRC connection release complete message to the first access network device.

Optionally, in a specific implementation, after the first UE returns the RRC connection release complete message to the first access network device, if there is an indirect path between the first UE and the first access network device previously, the first UE may release a sidelink SL communication connection to previous relay UE on the indirect path. It should be understood that, that the first UE releases the communication connection to the current relay UE means: An access stratum of the first UE indicates a PC5-S layer of the first UE to release the communication connection.

1006: The first access network device sends an RRC connection release notification (RRC connection release notification) message to the second access network device.

Corresponding to step 1003, after an RRC connection of the first UE is released, the first access network device sends the RRC connection release notification message to the second access network device, to indicate that the RRC connection of the first UE is released.

1007: The second access network device sends an RRC connection release notification (RRC connection release notification) message to the second UE.

The RRC connection release notification message indicates that the RRC connection of the first UE is already released.

Optionally, the RRC connection release notification message further includes a local identifier (local index) of the first UE. It should be understood that the local identifier of the first UE may be allocated by the second access network device.

1008: The second UE sends an RRC connection release complete (RRC connection release complete) message to the first UE.

Optionally, the first access network device may further send information about an SN status transfer of the first UE to the access network device accessed by the second UE, so that the second access network device accessed by the second UE delivers reconfiguration information to the second UE, to provide the second UE with the configuration for serving the first UE.

In this embodiment, remote UE directly sends a first request message to relay UE, so that the relay UE can resume or establish an RRC connection. This ensures that the remote UE can communicate with a network via the relay UE that resumes or establishes the RRC connection, so that communication quality of the remote UE is ensured.

Optionally, in a specific implementation, before step 901 or step 1001, the method may further include a process in which the first UE determines the second UE as the relay UE. The first UE may determine the second UE as the relay UE in the following two manners.

1. After discovering the second UE, the first UE sends a measurement report message to the first access network device. The measurement report message includes an identifier of the second UE and/or an identifier of an access network device on which the second UE camps. The first UE receives a path switch command message sent by the first access network device, where the path switch command message includes the identifier of the second UE and/or the identifier of the access network device on which the second UE camps, to indicate the first UE to determine the second UE as the target relay UE.

For example, the identifier of the second UE is an I-RNTI or a 5G-S-TMSI.

For example, the identifier of the access network device on which the second UE camps is a physical cell identifier PCI or a cell global identifier CGI.

Optionally, the measurement report message further includes information about signal quality of the second UE, for example, signal quality of a path between the second UE and the first UE.

Optionally, the first UE triggers reporting of the measurement report message when a measurement event configured by the first access network is met.

2. After discovering the second UE, the first UE determines the second UE as the target relay UE based on configuration information pre-delivered by the network. For example, the first UE may determine the target relay UE based on a path switch condition configured by the access network device.

For example, the path switch condition may be that information about signal quality of the second UE is greater than or is greater than or equal to a configured threshold. A specific path switch condition is not limited in this application.

Optionally, the first UE may alternatively determine the target relay UE based on an algorithm implementation of the first UE.

The foregoing describes in detail the communication method in embodiments of this application. The following describes in detail an access network device, UE, and a core network device in embodiments of this application.

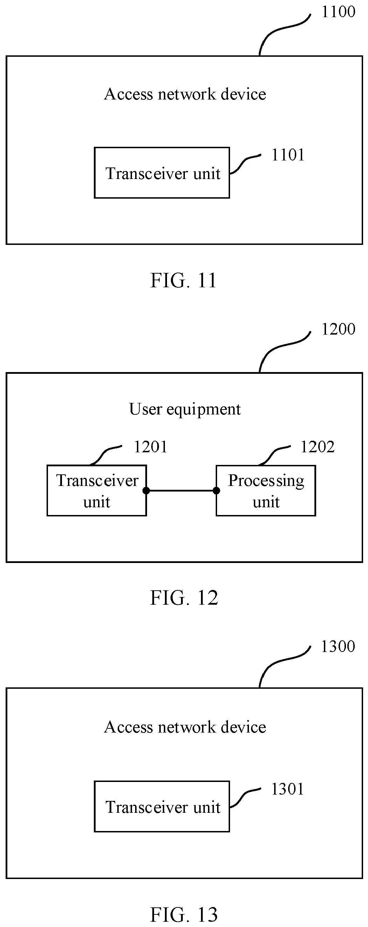

FIG. 11 is a schematic diagram of a structure of an access network device 1100 according to an embodiment of this application. It should be understood that the access network device 1100 can perform steps performed by the first access network device in the methods in FIG. 2 to FIG. 10. To avoid repetition, details are not described herein again.

The access network device 1100 includes a transceiver unit 1101. The transceiver unit 1101 is configured to receive a first message sent by first user equipment UE, where the first message includes a first identifier of second UE, and the first identifier is an identifier of the second UE in a radio resource control RRC inactive state or an RRC idle state. The transceiver unit 1101 is further configured to page the second UE based on the first message. The transceiver unit 1101 is further configured to send a second message to the first UE, where the second message indicates the first UE to perform path switching, the second message includes a second identifier of the second UE, and the second identifier is an identifier of the second UE in an RRC connected state.

Optionally, the transceiver unit 1101 is further configured to send a third message to a second access network device. The third message includes the first identifier, and the third message indicates the second access network device to page the second UE. The first message further includes an identifier of the second access network device, the second access network device is an anchor access network device of the second UE, and the first identifier is the identifier of the second UE in the RRC inactive state.

Optionally, the transceiver unit 1101 is further configured to send a fourth message to a third access network device, to indicate the third access network device to send a third message to a second access network device. The third message includes the first identifier, and the third message indicates the second access network device to page the second UE. The first message further includes an identifier of the second access network device and an identifier of the third access network device, the second access network device is an anchor access network device of the second UE, the third access network device is an access network device on which the second UE camps, and the first identifier is the identifier of the second UE in the RRC inactive state.

Optionally, the transceiver unit 1101 is further configured to receive a fifth message sent by the second access network device, where the fifth message includes the second identifier.

Optionally, the transceiver unit 1101 is further configured to receive a twelfth message sent by the third access network device, where the twelfth message includes the second identifier.

Optionally, the transceiver unit 1101 is further configured to send a sixth message to a first core network device, where the sixth message includes the first identifier, the sixth message indicates the first core network device to page the second UE, the first identifier is the identifier of the second UE in the RRC idle state, and the first core network device is a core network device corresponding to the first UE.

Optionally, the transceiver unit 1101 is further configured to send a seventh message to a third access network device. The seventh message indicates the third access network device to send a tenth message to a second core network device, the tenth message includes the first identifier, the tenth message indicates the second core network device to page the second UE, and the second core network device is a core network device corresponding to the second UE. The first message further includes an identifier of the third access network device, the third access network device is an access network device on which the second UE camps, and the first identifier is the identifier of the second UE in the RRC idle state.

Optionally, the transceiver unit 1101 is further configured to send an eighth message to a first core network device. The eighth message may indicate the first core network device to send an eleventh message to a second core network device, the eleventh message includes the first identifier, and the eleventh message indicates the first core network device to page the second UE. The first identifier is the identifier of the second UE in the RRC idle state, the first core network device is a core network device corresponding to the first UE, and the second core network device is a core network device corresponding to the second UE.

Optionally, the transceiver unit 1101 is further configured to receive a ninth message sent by the first core network device, where the ninth message includes the second identifier.

FIG. 12 is a schematic diagram of a structure of UE 1200 according to an embodiment of this application.

In a specific embodiment, the UE 1200 can perform the steps performed by the first UE in the methods in FIG. 2 to FIG. 8. To avoid repetition, details are not described herein again.

The UE 1200 includes a transceiver unit 1201 and a processing unit 1202. The transceiver unit 1201 is configured to send a first message to a first access network device, where the first message includes a first identifier of second UE, and the first identifier is an identifier of the second UE in an RRC inactive state or an RRC idle state. The transceiver unit 1201 is configured to receive a second message sent by the first access network device, where the second message indicates the first UE to perform path switching, the message includes a second identifier of the second UE, and the second identifier is an identifier of the second UE in a connected state. The processing unit 1202 is configured to establish an SL connection to the second UE based on the second identifier.

Optionally, the first message further includes an identifier of a second access network device, the second access network device is an anchor access network device of the second UE, and the first identifier is the identifier of the second UE in the inactive state.

Optionally, the first message further includes an identifier of a third access network device, the third access network device is an access network device on which the second UE camps, and the first identifier is the identifier of the second UE in the inactive state.

Optionally, the first identifier is the identifier of the second UE in the RRC idle state.

Optionally, the transceiver unit 1201 is further configured to receive a discovery message sent by the second UE, where the discovery message includes the first identifier.

In another embodiment, the UE 1200 can perform the steps performed by the first UE in the methods in FIG. 9 and FIG. 10. To avoid repetition, details are not described herein again.

The UE 1200 includes a transceiver unit 1201. The transceiver unit 1201 is configured to send a first request message to second UE, where the first request message is used to request the second UE to resume or establish an RRC connection. The transceiver unit 1201 is configured to receive a first request response message sent by the second UE, where the first request response message indicates that the second UE is in an RRC connected state.

Optionally, the first UE further includes a processing unit 1202, and the processing unit 1202 is configured to determine the second UE as relay UE.

In another specific embodiment, the UE 1200 can perform the steps performed by the second UE in the methods in FIG. 9 and FIG. 10. To avoid repetition, details are not described herein again.

The UE 1200 includes a transceiver unit 1201 and a processing unit 1202. The transceiver unit 1201 is configured to receive a first request message sent by first UE, where the first request message is used to request the second UE to resume or establish an RRC connection. The processing unit 1202 is configured to resume or establish the RRC connection. The transceiver unit 1201 is configured to send a first request response message to the first UE, where the first request response message indicates that the second UE is in an RRC connected state.

Optionally, the processing unit 1202 is further configured to indicate the transceiver unit 1201 to send a second request message to an access network device, where the second request message is used to request to resume or establish the RRC connection. The transceiver unit 1201 is further configured to receive a third request message sent by the access network device, where the third request message indicates the second UE to resume or establish the RRC connected state. The transceiver unit 1201 is further configured to send a third request response message to the access network device, where the third request response message indicates that the second UE resumes or establishes the RRC connection.

FIG. 13 is a schematic diagram of a structure of an access network device 1300 according to an embodiment of this application. It should be understood that the access network device 1300 can perform the steps performed by the second access network device in the methods in FIG. 2 to FIG. 10. To avoid repetition, details are not described herein again.

The access network device 1300 includes a transceiver unit 1301. The transceiver unit 1301 is configured to receive a third message sent by a first access network device, where the third message indicates the access network device 1300 to page second UE, the third message includes a first identifier, and the first identifier is an identifier of the second UE in an RRC inactive state. The transceiver unit 1301 is configured to page the second UE based on a first message.

Optionally, the access network device 1300 further includes the transceiver unit 1301. The transceiver unit 1301 is configured to send a fifth message to the first access network device, where the fifth message includes a second identifier, and the second identifier is an identifier of the second UE in an RRC connected state.

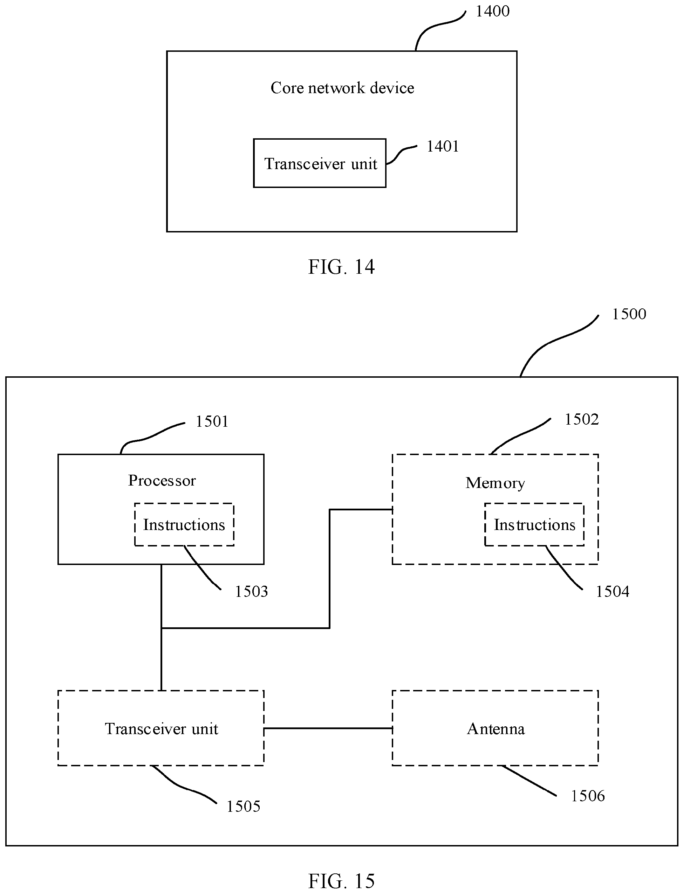

FIG. 14 is a schematic diagram of a structure of a core network device 1400 according to an embodiment of this application. It should be understood that the core network device 1400 can perform the steps performed by the first core network device in the methods in FIG. 2 to FIG. 10. To avoid repetition, details are not described herein again.

The core network device 1400 includes a transceiver unit 1401. The transceiver unit 1401 is configured to receive a sixth message sent by a first access network device, where the sixth message indicates the first core network device to page second UE, the sixth message includes a first identifier, the first identifier is an identifier of the second UE in an RRC idle state, and the first core network device is a core network device corresponding to first UE. The transceiver unit 1401 is configured to page the second UE.

Optionally, the transceiver unit 1401 is configured to send a ninth message to the first access network device, where the ninth message includes a second identifier, and the second identifier is an identifier of the second UE in an RRC connected state.

FIG. 15 is a schematic diagram of a structure of a communication apparatus 1500 according to an embodiment of this application. The communication apparatus 1500 may be configured to implement the methods described in the foregoing method embodiments. For details, refer to the descriptions in the foregoing method embodiments. The communication apparatus 1500 may be a chip, an access network device (for example, a base station), UE, a core network device, or the like.

The communication apparatus 1500 includes one or more processors 1501. The processor 1501 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a terminal device, or a chip), execute a software program, and process data of the software program. The communication apparatus may include a transceiver unit, configured to input (receive) and output (send) signals. For example, the communication apparatus may be a chip, and the transceiver unit may be an input and/or output circuit or a communication interface of the chip. The chip may be used for a terminal, a base station, or another network device. For another example, the communication apparatus may be a terminal, a base station, or another network device, and the transceiver unit may be a transceiver, a radio frequency chip, or the like.

The communication apparatus 1500 includes the one or more processors 1501, and the one or more processors 1501 may implement the method performed by the network device or the terminal device in the embodiment shown in FIG. 2.

In a possible design, the communication apparatus 1500 includes a means (means) for generating reference signal indication information and a means (means) for sending the reference signal indication information. One or more processors may be used to implement functions of the means for generating the reference signal indication information and the means for sending the reference signal indication information. For example, the reference signal indication information may be generated by using the one or more processors, and sent by using a transceiver, an input/output circuit, or an interface of a chip. For the reference signal indication information, refer to the related descriptions in the foregoing method embodiments.

In a possible design, the communication apparatus 1500 includes a means (means) for receiving reference signal indication information and a means (means) for sending uplink data based on the reference signal indication information. For the reference signal indication information and how to send the uplink data based on the reference signal indication information, refer to the related descriptions in the foregoing method embodiments. For example, the reference signal indication information may be received by using a transceiver, an input/output circuit, or an interface of a chip, and the uplink data is sent based on the reference signal indication information by using the one or more processors.

Optionally, the processor 1501 may further implement other functions in addition to the methods in the foregoing embodiments.

Optionally, in a design, the processor 1501 may execute instructions, to enable the communication apparatus 1500 to perform the methods described in the foregoing method embodiments. All or some of the instructions, for example, instructions 1503, may be stored in the processor. Alternatively, all or some of the instructions, for example, instructions 1504, may be stored in a memory 1502 coupled to the processor. Alternatively, the instructions 1503 and the instructions 1504 may be used together to enable the communication apparatus 1500 to perform the methods described in the foregoing method embodiments.

In another possible design, the communication apparatus 1500 may alternatively include a circuit. The circuit may implement functions of the network device or the terminal device in the foregoing method embodiments.

In still another possible design, the communication apparatus 1500 may include one or more memories 1502, storing instructions 1504. The instructions may be run on the processor, to enable the communication apparatus 1500 to perform the methods described in the foregoing method embodiments. Optionally, the memory may further store data. Optionally, the processor may also store instructions and/or data. For example, the one or more memories 1502 may store the correspondence described in the foregoing embodiments, or the related parameter, table, or the like in the foregoing embodiments. The processor and the memory may be separately disposed, or may be integrated together.

In still another possible design, the communication apparatus 1500 may further include a transceiver unit 1505 and an antenna 1506. The processor 1501 may be referred to as a processing unit, and controls the communication apparatus (a terminal or a base station). The transceiver unit 1505 may be referred to as a transceiver, a transceiver circuit, a transceiver, or the like, and is configured to implement a transceiver function of the communication apparatus through the antenna 1506.

This application further provides a communication system, including the foregoing access network device, UE, and core network device.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly performed and completed by using a hardware decoding processor, or may be performed and completed by using a combination of hardware and a software module in the decoding processor. The software module may be located in a mature storage medium in the field, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous path dynamic random access memory (synchlink DRAM, SLDRAM), and a direct rambus random access memory (direct Rambus RAM, DR RAM). It should be noted that the memory of the system and the methods described in this specification includes but is not limited to these and any memory of another proper type.

An embodiment of this application further provides a computer-readable medium. The computer-readable medium stores a computer program. When the computer program is executed by a computer, the communication method in any one of the foregoing method embodiments is implemented.

An embodiment of this application further provides a computer program product. When the computer program product is executed by a computer, the communication method in any one of the foregoing method embodiments is implemented.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatuses, and methods may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing computer-readable storage medium includes any medium that can store program code, such as a USB flash drive, a removable hard disk, a read-only memory, a random access memory, a magnetic disk, or an optical disc.

## Claims

1. A communication method, comprising:
receiving, by a first access network device, a first message sent by first user equipment UE, wherein the first message comprises a first identifier of second UE, and the first identifier is an identifier of the second UE in a radio resource control RRC inactive state or an RRC idle state;
paging, by the first access network device, the second UE based on the first message; and
sending, by the first access network device, a second message to the first UE, wherein the second message indicates the first UE to perform path switching, the second message comprises a second identifier of the second UE, and the second identifier is an identifier of the second UE in an RRC connected state.

2. The communication method according to claim 1, wherein the paging, by the first access network device, the second UE based on the first message comprises:
sending, by the first access network device, a third message to a second access network device, wherein the third message comprises the first identifier, and the third message indicates the second access network device to page the second UE; and
the first message further comprises an identifier of the second access network device, the second access network device is an anchor access network device of the second UE, and the first identifier is the identifier of the second UE in the RRC inactive state.

3. The communication method according to claim 1, wherein the paging, by the first access network device, the second UE based on the first message comprises:
sending, by the first access network device, a fourth message to a third access network device, to indicate the third access network device to send a third message to a second access network device, wherein the third message comprises the first identifier, and the third message indicates the second access network device to page the second UE; and
the first message further comprises an identifier of the second access network device and an identifier of the third access network device, the second access network device is an anchor access network device of the second UE, the third access network device is an access network device on which the second UE camps, and the first identifier is the identifier of the second UE in the RRC inactive state.

4. The communication method according to claim 2, wherein the method further comprises:
receiving, by the first access network device, a fifth message sent by the second access network device, wherein the fifth message comprises the second identifier.

5. The communication method according to claim 3, wherein the method further comprises:
receiving, by the first access network device, a twelfth message sent by the third access network device, wherein the twelfth message comprises the second identifier.

6. The communication method according to claim 1, wherein the paging, by the first access network device, the second UE based on the first message comprises:
sending, by the first access network device, a sixth message to a first core network device, wherein the sixth message comprises the first identifier, the sixth message indicates the first core network device to page the second UE, the first identifier is the identifier of the second UE in the RRC idle state, and the first core network device is a core network device corresponding to the first UE.

7. The communication method according to claim 1, wherein the paging, by the first access network device, the second UE based on the first message comprises:
sending, by the first access network device, a seventh message to a third access network device, wherein the seventh message indicates the third access network device to send a tenth message to a second core network device, the tenth message comprises the first identifier, the tenth message indicates the second core network device to page the second UE, a first core network device is a core network device corresponding to the first UE, and the second core network device is a core network device corresponding to the second UE; and
the first message further comprises an identifier of the third access network device, the third access network device is an access network device on which the second UE camps, and the first identifier is the identifier of the second UE in the RRC idle state.

8. The communication method according to claim 1, wherein the paging, by the first access network device, the second UE based on the first message comprises:
sending, by the first access network device, an eighth message to a first core network device, wherein the eighth message indicates the first core network device to send an eleventh message to a second core network device, the eleventh message comprises the first identifier, and the eleventh message indicates the second core network device to page the second UE; and
the first identifier is the identifier of the second UE in the RRC idle state, the first core network device is a core network device corresponding to the first UE, and the second core network device is a core network device corresponding to the second UE.

9. The communication method according to claim 6 or 8, wherein the method further comprises:
receiving, by the first access network device, a ninth message sent by the first core network device, wherein the ninth message comprises the second identifier.

10. A communication method, comprising:
sending, by first UE, a first message to a first access network device, wherein the first message comprises a first identifier of second UE, and the first identifier is an identifier of the second UE in an RRC inactive state or an RRC idle state;
receiving, by the first UE, a second message sent by the first access network device, wherein the second message indicates the first UE to perform path switching, the message comprises a second identifier of the second UE, and the second identifier is an identifier of the second UE in a connected state; and
establishing, by the first UE, a sidelink SL connection to the second UE based on the second identifier.

11. The communication method according to claim 10, wherein the first message further comprises an identifier of a second access network device, the second access network device is an anchor access network device of the second UE, and
the first identifier is the identifier of the second UE in the inactive state.

12. The communication method according to claim 10, wherein the first identifier is the identifier of the second UE in the RRC idle state.

13. The communication method according to any one of claims 10 to 12, wherein the method further comprises:
receiving, by the first UE, a discovery message sent by the second UE, wherein the discovery message comprises the first identifier.

14. A communication method, comprising:
sending, by first UE, a first request message to second UE, wherein the first request message is used to request the second UE to resume or establish an RRC connection; and
receiving, by the first UE, a first request response message sent by the second UE, wherein the first request response message indicates that the second UE is in an RRC connected state.

15. The communication method according to claim 14, wherein the method further comprises:
determining, by the first UE, the second UE as relay UE.

16. A communication method, comprising:
receiving, by second UE, a first request message sent by first UE, wherein the first request message is used to request the second UE to resume or establish an RRC connection;
resuming or establishing, by the second UE, the RRC connection; and
sending, by the second UE, a first request response message to the first UE, wherein the first request response message indicates that the second UE is in an RRC connected state.

17. The communication method according to claim 16, wherein the resuming or establishing, by the second UE, the RRC connection comprises:
sending, by the second UE, a second request message to an access network device, wherein the second request message is used to request to resume or establish the RRC connection;
receiving, by the second UE, a third request message sent by the access network device, wherein the third request message indicates the second UE to resume or establish the RRC connection; and
sending, by the second UE, a third request response message to the access network device, wherein the third request response message indicates that the second UE resumes or establishes the RRC connection.

18. A communication method, comprising:
receiving, by a second access network device, a third message sent by a first access network device, wherein the third message indicates the second access network device to page second UE, the third message comprises a first identifier, and the first identifier is an identifier of the second UE in an RRC inactive state; and
paging, by the second access network device, the second UE based on the third message.

19. The communication method according to claim 18, wherein the method further comprises:
sending, by the second access network device, a fifth message to the first access network device, wherein the fifth message comprises a second identifier, and the second identifier is an identifier of the second UE in an RRC connected state.

20. A communication method, comprising:
receiving, by a first core network device, a sixth message sent by a first access network device, wherein the sixth message indicates the first core network device to page second UE, the sixth message comprises a first identifier, the first identifier is an identifier of the second UE in an RRC idle state, and the first core network device is a core network device corresponding to first UE; and
paging, by the first core network device, the second UE.

21. The communication method according to claim 20, wherein the method further comprises:
sending, by the first core network device, a ninth message to the first access network device, wherein the ninth message comprises a second identifier, and the second identifier is an identifier of the second UE in an RRC connected state.

22. The communication method according to claim 20 or 21, wherein the paging, by the first core network device, the second UE comprises:
determining, by the first core network device, a second core network device based on the first identifier, wherein the second core network device is a core network device corresponding to the second UE; and
sending, by the first core network device, an eleventh message to the second core network device, wherein the eleventh message comprises the first identifier, and the eleventh message indicates the second core network device to page the second UE.

23. A communication apparatus, comprising a transceiver unit, wherein
the transceiver unit is configured to receive a first message sent by first user equipment UE, wherein the first message comprises a first identifier of second UE, and the first identifier is an identifier of the second UE in a radio resource control RRC inactive state or an RRC idle state;
the transceiver unit is further configured to page the second UE based on the first message; and
the transceiver unit is further configured to send a second message to the first UE, wherein the second message indicates the first UE to perform path switching, the second message comprises a second identifier of the second UE, and the second identifier is an identifier of the second UE in an RRC connected state.

24. The communication apparatus according to claim 23, wherein the transceiver unit is further configured to send a third message to a second access network device, wherein the third message comprises the first identifier, and the third message indicates the second access network device to page the second UE; and
the first message further comprises an identifier of the second access network device, the second access network device is an anchor access network device of the second UE, and the first identifier is the identifier of the second UE in the RRC inactive state.

25. The communication apparatus according to claim 23, wherein the transceiver unit is further configured to send a fourth message to a third access network device, to indicate the third access network device to send a third message to a second core network device, wherein the third message comprises the first identifier, and the third message indicates the second access network device to page the second UE; and
the first message further comprises an identifier of the second access network device and an identifier of the third access network device, the second access network device is an anchor access network device of the second UE, the third access network device is an access network device on which the second UE camps, the first identifier is the identifier of the second UE in the RRC inactive state, and a second core network device is a core network device corresponding to the second UE.

26. The communication apparatus according to claim 24, wherein the transceiver unit is further configured to receive a fifth message sent by the second access network device, and the fifth message comprises the second identifier.

27. The communication apparatus according to claim 25, wherein the transceiver unit is further configured to receive a twelfth message sent by the third access network device, and the twelfth message comprises the second identifier.

28. The communication apparatus according to claim 23, wherein the transceiver unit is further configured to send a sixth message to a first core network device, wherein the sixth message comprises the first identifier, the sixth message indicates the first core network device to page the second UE, the first identifier is the identifier of the second UE in the RRC idle state, and the first core network device is a core network device corresponding to the first UE.

29. The communication apparatus according to claim 23, wherein the transceiver unit is further configured to send a seventh message to a third access network device, wherein the seventh message indicates the third access network device to send a tenth message to a second core network device, the tenth message comprises the first identifier, the tenth message indicates the second core network device to page the second UE, and the second core network device is a core network device corresponding to the second UE; and the first message further comprises an identifier of the third access network device, the third access network device is an access network device on which the second UE camps, and the first identifier is the identifier of the second UE in the RRC idle state.

30. The communication apparatus according to claim 23, wherein the transceiver unit is further configured to send an eighth message to a first core network device, wherein the eighth message indicates the first core network device to send an eleventh message to a second core network device, the eleventh message comprises the first identifier, and the eleventh message indicates the second core network device to page the second UE; and
the first identifier is the identifier of the second UE in the RRC idle state, the first core network device is a core network device corresponding to the first UE, and the second core network device is a core network device corresponding to the second UE.

31. The communication apparatus according to claim 28 or 30, wherein the transceiver unit is further configured to receive a ninth message sent by the first core network device, wherein the ninth message comprises the second identifier.

32. A communication apparatus, comprising a transceiver unit and a processing unit, wherein the transceiver unit is configured to send a first message to a first access network device, wherein the first message comprises a first identifier of second UE, and the first identifier is an identifier of the second UE in an RRC inactive state or an RRC idle state;
the transceiver unit is configured to receive a second message sent by the first access network device, wherein the second message indicates the communication apparatus to perform path switching, the message comprises a second identifier of the second UE, and the second identifier is an identifier of the second UE in a connected state; and
the processing unit is configured to establish a sidelink SL connection to the second UE based on the second identifier.

33. The communication apparatus according to claim 32, wherein the first message further comprises an identifier of a second access network device, the second access network device is an anchor access network device of the second UE, and the first identifier is the identifier of the second UE in the RRC inactive state.

34. The communication apparatus according to claim 32, wherein the first identifier is the identifier of the second UE in the RRC idle state.

35. The communication apparatus according to any one of claims 32 to 34, wherein the transceiver unit is further configured to receive a discovery message sent by the second UE, and the discovery message comprises the first identifier.

36. A communication apparatus, comprising a transceiver unit, wherein the transceiver unit is configured to send a first request message to second UE, and the first request message is used to request the second UE to resume or establish an RRC connection; and the transceiver unit is configured to receive a first request response message sent by the second UE, and the first request response message indicates that the second UE is in an RRC connected state.

37. The communication apparatus according to claim 36, wherein the communication apparatus further comprises a processing unit, and the processing unit is configured to determine the second UE as relay UE.

38. A communication apparatus, comprising a transceiver unit and a processing unit, wherein
the transceiver unit is configured to receive a first request message sent by first UE, and the first request message is used to request the communication apparatus to resume or establish an RRC connection;
the processing unit is configured to resume or establish the RRC connection; and
the transceiver unit is configured to send a first request response message to the first UE, and the first request response message indicates that the communication apparatus is in an RRC connected state.

39. The communication apparatus according to claim 38, wherein the processing unit is further configured to indicate the transceiver unit to send a second request message to an access network device, and the second request message is used to request to resume or establish the RRC connection;
the transceiver unit is further configured to receive a third request message sent by the access network device, and the third request message indicates the communication apparatus to resume or establish the RRC connection; and
the transceiver unit is further configured to send a third request response message to the access network device, and the third request response message indicates that the communication apparatus resumes or establishes the RRC connection.

40. A communication apparatus, comprising a transceiver unit, wherein
the transceiver unit is configured to receive a third message sent by a first access network device, wherein the third message indicates the communication apparatus to page second UE, the third message comprises a first identifier, and the first identifier is an identifier of the second UE in an RRC inactive state; and
the transceiver unit is configured to page the second UE based on a first message.

41. The communication apparatus according to claim 40, wherein the transceiver unit is configured to send a fifth message to the first access network device, wherein the fifth message comprises a second identifier, and the second identifier is an identifier of the second UE in an RRC connected state.

42. A communication apparatus, comprising a transceiver unit, wherein
the transceiver unit is configured to receive a sixth message sent by a first access network device, wherein the sixth message indicates the communication apparatus to page second UE, the sixth message comprises a first identifier, the first identifier is an identifier of the second UE in an RRC idle state, and the communication apparatus is a core network device corresponding to first UE; and
the transceiver unit is configured to page the second UE.

43. The communication apparatus according to claim 42, wherein the transceiver unit is configured to send a ninth message to the first access network device, wherein the ninth message comprises a second identifier, and the second identifier is an identifier of the second UE in an RRC connected state.

44. The communication apparatus according to claim 42 or 43, wherein the communication apparatus further comprises a processing unit, wherein the processing unit is configured to determine a second core network device based on the first identifier, and the second core network device is a core network device corresponding to the second UE; and
the transceiver unit is further configured to send an eleventh message to the second core network device, wherein the eleventh message comprises the first identifier, and the eleventh message indicates the second core network device to page the second UE.

45. A communication apparatus, comprising a processor and a memory, wherein the memory stores operation instructions, and the processor reads the operation instructions in the memory to implement the method according to any one of claims 1 to 9 or either of claims 18 and 19.

46. A communication apparatus, comprising a processor and a memory, wherein the memory stores operation instructions, and the processor reads the operation instructions in the memory to implement the method according to any one of claims 10 to 17.

47. A communication apparatus, comprising a processor and a memory, wherein the memory stores operation instructions, and the processor reads the operation instructions in the memory to implement the method according to either of claims 20 and 21.

48. A communication system, comprising the communication apparatus according to claim 45, the communication apparatus according to claim 46, and the communication apparatus according to claim 47.

49. A computer-readable storage medium, comprising instructions, wherein when the instructions are run on a computer, the computer is enabled to perform the method according to any one of claims 1 to 22.

50. A computer program product, comprising instructions, wherein when the computer program product runs on a computer, the computer is enabled to perform the method according to any one of claims 1 to 22.
